# EUROPEAN PATENT SPECIFICATION

(11) **EP 1 965 098 B1**
(45) Date of publication and mention of the grant of the patent: **02.01.2013**
(21) Application number: 08250669.2
(22) Date of filing: 27.02.2008
(51) Int. Cl.: F16H 61/662, B62K 11/14

(54) **Transmission control system**
Getriebesteuerungssystem
Système de commande de transmission

(30) Priority: 28.02.2007 JP 2007049111; 22.11.2007 JP 2007303411
(43) Date of publication of application: 03.09.2008
(73) Proprietor: Yamaha Hatsudoki Kabushiki Kaisha, Shizuoka-ken Shizuoka 438-8501 (JP)
(72) Inventor: Unno, Toshio, Shizuoka-ken 438-8501 (JP)
(74) Representative: Moreland, David

(56) References cited:
- JP-A- 62 175 228
- US-A- 6 035 735
- US-A- 6 086 506

## Description

### FIELD OF THE INVENTION

The present invention relates to a control and a transmission of a straddle type vehicle, a transmission, and also relates to the straddle type vehicle.

### BACKGROUND TO THE INVENTION

Electronically controlled continuously variable transmissions (referred to as "ECVT" hereafter) are known. In a conventional ECVT, the gear ratio is automatically changed based upon a gear ratio map indicative of relationships among vehicle speeds, engine speeds (accelerator openings) and gear ratios. Accordingly, vehicles incorporating an ECVT (hereunder, called "vehicle incorporating the ECVT") do not require any gear change operations or clutch operations by a rider. Therefore, recently, the ECVT is incorporated in various vehicles.

The rider, however, cannot change the gear ratios optionally out of the setting given in the gear ratio map, with the vehicle incorporating the ECVT. Hence, the rider has difficulty in effectively activating engine braking at will with the vehicle incorporating the ECVT. More specifically, it is difficult for the rider to activate the engine brake more strongly than that given by the gear ratio map.

Also, with the vehicle incorporating the ECVT, it is difficult to make a so-called kick down operation whereby, when a vehicle passes or overtakes another vehicle, a shift down operation is intentionally made more greatly than in a normal state to increase acceleration of the vehicle.

Under the circumstances, a vehicle incorporating the ECVT is proposed whereby both of the so-called automatic transmission (AT) mode in which the gear ratios can be continuously and automatically changed and the so-called manual transmission (MT) mode in which the gear ratios can be changed optionally by the rider are selectable. More specifically, JP-A-04-131588, for example, proposes an ECVT whereby gear ratios of a continuously variable transmission can be manually set in accordance with positions of a deceleration lever. Also, JP-A-62-175228, for example, proposes an ECVT whereby gear ratios can be forcibly changed or an ECVT having a switch with which a shift down operation can be manually made.

US6035735 A describes a device that contains an electronic control system, which, in an automatic mode, automatically determines the transmission ratio in dependence of an operating condition. The control system comprises selector devices, which, in the automatic mode, determine the driving stages of the transmission control and, in a manual mode, change the transmission ratio in steps. After a manual selection of the transmission ratio, driving and operating situations in which the automatic mode of the control system is desirable are detected and, if such a situation is detected, a return circuit causes the electronic control system to return to the automatic mode.

However, the conventional vehicle incorporating the ECVT that is changeable between the AT mode and the MT mode requires complicated and troublesome operations when the shift down operation is intentionally made in the AT mode to accelerate or decelerate the vehicle. Specifically, in the AT mode, at least the following three operations are necessary for increase or decrease the vehicle speed by shifting down intentionally.
1. The switching operation from the AT mode to the MT mode.
2. The shift down operation in the MT mode.
3. The switching operation from the MT mode to the AT mode.

The present invention is made in view of the above points and aims to make it practicable that an intentional shift down operation is easily made in the AT mode.

### SUMMARY OF THE INVENTION

According to an aspect of the present invention, there is provided a control system adapted for use with an electronically controlled continuously variable transmission located between a driving source and a driving wheel of a vehicle, said control system comprising:
a gear ratio control section for controlling a gear ratio of the transmission;
a gear change mode selecting section for selecting one of a plurality of gear change modes, including an automatic transmission (AT) mode in which the gear ratio control section changes the gear ratio of the transmission continuously and a manual transmission (MT) mode in which the gear ratio control section changes the gear ratio of the transmission among a plurality of predetermined gear ratios;
a mode temporarily changing switch for outputting a mode change signal;
an MT mode temporarily selecting section for:
   temporarily making the gear change mode selecting section select the MT mode temporarily when the mode change signal is inputted in the AT mode selected by the gear change mode selecting section; and
   making the gear ratio control section change a gear ratio of the transmission to one of the plurality of the predetermined gear ratios which is lower than a current gear ratio;
a release signal outputting section for outputting a release signal when at least one of a predetermined vehicle operation is made and a predetermined condition is satisfied in connection with the vehicle; and
an AT mode returning section for returning the gear change mode selected by the gear change mode selecting section to the AT mode when the release signal is outputted after the MT mode is temporarily selected by the MT mode temporarily selecting section.

The MT mode may include an automatic MT mode in which the gear ratio control section automatically changes a gear ratio of the transmission among the plurality of predetermined gear ratios in accordance with a driving state of the straddle type vehicle. The MT mode may include a manual MT mode in which the gear ratio control section changes a gear ratio of the transmission among the plurality of predetermined gear ratios in accordance with an operation of a rider of the straddle type vehicle.

The control system may further comprise:
a throttle opening sensor for detecting a throttle opening;
a rotational speed sensor for detecting a rotational speed of a driving source of an associated vehicle, and
a vehicle speed sensor for detecting a vehicle speed of the associated vehicle,
wherein the release signal outputting section outputs the release signal if at least one item among a throttle opening of the straddle type vehicle, a rotational speed of the driving source, and a vehicle speed of the straddle type vehicle satisfies the predetermined condition.

The release signal outputting section may output a release signal when a predetermined period elapses after the MT mode is temporarily selected by the MT mode temporarily selecting section.

The release signal outputting section may output a release signal when a brake of an associated vehicle is operated.

The control system may further comprise:
a shift up switch for shifting up the transmission when the gear change mode selecting section selects the MT mode,
and the release signal outputting section outputs the release signal when the shift up switch is operated during a period in which the MT mode is temporarily selected by the MT mode temporarily selecting section.

The release signal outputting section may output a release signal when the mode change signal is outputted after the MT mode is temporarily selected by the MT mode temporarily selecting section.

The control system may further comprise a shift down switch for outputting a shift down signal.

The gear ratio control section may change the gear ratio of the transmission to one of the plurality of predetermined gear ratios which is lower than the current gear ratio, when the mode change signal is outputted during a period in which the MT mode is temporarily selected by the MT mode temporarily selecting section.

The mode temporarily changing switch may comprise a push type switch which outputs the mode change signal when the switch is activated.

The shift down switch may be adapted to shift down the transmission when the gear change mode selecting section selects the MT mode. The shift down switch and the mode temporarily changing switch may be comprised in a single switch.

The control system may further comprise a mode selecting switch for outputting a mode selecting signal, whereby the gear change mode selecting section selects one of the plurality of gear change modes.

According to another aspect of the present invention there is provided a transmission comprising:
a continuously variable electronically controlled gear change mechanism adapted to be disposed between a driving source and a driving wheel of a vehicle;
a control system for controlling the gear change mechanism, wherein the control system comprises:
   a gear ratio control section for controlling the gear ratio of the gear change mechanism;
   a gear change mode selecting section for selecting one of a plurality of gear change modes, including an automatic transmission (AT) mode in which the gear ratio control section changes the gear ratio of the gear change mechanism continuously and a manual transmission (MT) mode in which the gear ratio control section changes the gear ratio of the transmission among a plurality of predetermined gear ratios;
   a mode temporarily changing switch for outputting a mode change signal;
   an MT mode temporarily selecting section for:
      temporarily making the gear change mode selecting section select the MT mode temporarily when the mode change signal is inputted in the AT mode selected by the gear change mode selecting section; and
      making the gear ratio control section change a gear ratio of the transmission to one of the plurality of predetermined gear ratios which is lower than a current gear change ratio;
   a release signal outputting section for outputting a release signal when at least one of a predetermined vehicle operation is made and a predetermined condition is satisfied in connection with the vehicle; and
   an AT mode returning section for returning the gear change mode selected by the gear change mode selecting section to the AT mode when the release signal is outputted after the MT mode is temporarily selected by the MT mode temporarily selecting section.

According to a further aspect of the present invention there is provided vehicle comprising:
a driving source;
a driving wheel driven by the driving source;
a transmission located between the driving source and the driving wheel and including a continuously variable electrically controlled gear change mechanism;
a control system for controlling the gear change mechanism, wherein the control system comprises:
   a gear ratio control section for controlling the gear ratio of the gear change mechanism;
   a gear change mode selecting section for selecting one of a plurality gear change modes, including an automatic transmission (AT) mode in which the gear ratio control section changes the gear ratio of the gear change mechanism continuously and a manual transmission (MT) mode in which the gear ratio control section changes the gear ratio of the gear change mechanism among a plurality of predetermined gear ratios;
   a mode temporarily changing switch for outputting a mode change signal;
   an MT mode temporarily selecting section for:
      temporarily making the gear change mode selecting section select the MT mode temporarily when the mode change signal is inputted in the AT mode selected by the gear change mode selecting section; and
      making the gear ratio control section change a gear ratio of the gear change mechanism to one of the plurality of predetermined gear ratios which is lower than the current gear ratio; and
   a release signal outputting section for outputting a release signal when at least one of a predetermined vehicle operation is made and when a predetermined condition is satisfied in connection with the vehicle; and
   an AT mode returning section for returning the gear change mode selected by the gear change mode selecting section to the AT mode when the release signal is outputted after the MT mode is temporarily selected by the MT mode temporarily selecting section.

The mode temporarily changing switch may be located where a rider can operate the switch by their thumb.

The vehicle may further comprise handlebars including a right grip and a left grip for a rider to hold, wherein the mode temporarily changing switch is located on a right side of the left grip.

The vehicle may comprise a straddle type vehicle.

According to another aspect of the present invention there is provided a control system for an electronically controlled transmission disposed between a drive source and a drive wheel of a straddle type vehicle and being capable of continuously changing a gear ratio. The straddle type vehicle has a mode temporarily changing switch. The mode temporarily changing switch outputs a mode change signal to the control system. The control system in accordance with the present invention includes a gear ratio control section, a gear change mode selecting section, a release signal outputting section, an MT mode temporarily selecting section and an AT mode returning section. The gear ratio control section controls the gear ratio of the transmission. The gear change mode selecting section selects one of a plurality of gear change modes. The plurality of gear change modes include an AT mode and an MT mode. In the AT mode, the gear ratio control section continuously changes the gear ratio of the transmission in accordance with a running state of the straddle type vehicle. In the MT mode, the gear ratio control section changes the gear ratio of the transmission among predetermined multiple gear ratios. The release signal outputting section outputs a release signal when a predetermined operation is made to the straddle type vehicle and when a predetermined condition is satisfied in connection with the straddle type vehicle. The MT mode temporarily selecting section makes the gear change mode selecting section temporarily select the MT mode when the mode change signal is inputted under a condition that the AT mode is selected by the gear change mode selecting section. The MT mode temporarily selecting section also makes the gear ratio control section change the gear ratio of the transmission to one of gear ratios existing in a LOW range which is lower than a current gear ratio of the transmission within the predetermined multiple gear ratios. The AT mode returning section returns the gear change mode selected by the gear change mode selecting section to the AT mode when the release signal is outputted after the MT mode is temporarily selected by the MT mode temporarily selecting section.

According to a yet further aspect of the present invention there is provided a transmission having an electronically controlled gear change mechanism and a control system for controlling the gear change mechanism. The electronically controlled gear change mechanism is disposed between a drive source and a drive wheel of a straddle type vehicle, and being capable of continuously changing a gear ratio. The control system controls the gear change mechanism. The straddle type vehicle has a mode temporarily changing switch. The mode temporarily changing switch outputs a mode change signal to the control system. The control system includes a gear ratio control section, a gear change mode selecting section, a release signal outputting section, an MT mode temporarily selecting section and AT mode returning section. The gear ratio control section controls the gear ratio of the gear change mechanism. The gear change mode selecting section selects one of a plurality of gear change modes. The plurality of gear change modes include an AT mode and an MT mode. In the AT mode, the gear ratio control section continuously changes the gear ratio of the gear change mechanism in accordance with a running state of the straddle type vehicle. In the MT mode, the gear ratio control section changes the gear ratio of the gear change mechanism among predetermined multiple gear ratios. The release signal outputting section outputs a release signal when a predetermined operation is made to the straddle type vehicle and when a predetermined condition is satisfied in connection with the straddle type vehicle. The MT mode temporarily selecting section makes the gear change mode selecting section temporarily select the MT mode when the mode change signal is inputted under a condition that the AT mode is selected by the gear change mode selecting section. The MT mode temporarily selecting section also makes the gear ratio control section change the gear ratio of the gear change mechanism to one of gear ratios existing in a LOW range which is lower than a current gear ratio of the gear change mechanism within the predetermined multiple gear ratios. The AT mode returning section returns the gear change mode selected by the gear change mode selecting section to the AT mode when the release signal is outputted after the MT mode is temporarily selected by the MT mode temporarily selecting section.

According to another aspect of the present invention there is provided a straddle type vehicle which includes a drive source, a drive wheel and a transmission. The drive wheel is driven by the drive source. The transmission has an electronically controlled gear change mechanism and a control system. The gear change mechanism is disposed between the drive source and the drive wheel and is capable of continuously changing a gear ratio. The control system controls the gear change mechanism. The straddle type vehicle in accordance with the present invention includes a mode temporarily changing switch. The mode temporarily changing switch outputs a mode change signal to the control system. The control system includes a gear ratio control section, a gear change mode selecting section, a release signal outputting section, an MT mode temporarily selecting section and AT mode returning section. The gear ratio control section controls the gear ratio of the gear change mechanism. The gear change mode selecting section selects one of a plurality of gear change modes. The plurality of gear change modes include an AT mode and an MT mode. In the AT mode, the gear ratio control section continuously changes the gear ratio of the gear change mechanism in accordance with a running state of the straddle type vehicle. In the MT mode, the gear ratio control section changes the gear ratio of the gear change mechanism among predetermined multiple gear ratios. The release signal outputting section outputs a release signal when a predetermined operation is made to the straddle type vehicle and when a predetermined condition is satisfied in connection with the straddle type vehicle. The MT mode temporarily selecting section makes the gear change mode selecting section temporarily select the MT mode when the mode change signal is inputted under a condition that the AT mode is selected by the gear change mode selecting section. The MT mode temporarily selecting section also makes the gear ratio control section change the gear ratio of the gear change mechanism to one of gear ratios existing in a LOW range which is lower than a current gear ratio of the gear change mechanism within the predetermined multiple gear ratios. The AT mode returning section returns the gear change mode selected by the gear change mode selecting section to the AT mode when the release signal is outputted after the MT mode is temporarily selected by the MT mode temporarily selecting section.

According to the present invention, an intentional shift down operation can be easily made in the AT mode.

### BRIEF DESCRIPTION OF THE DRAWINGS

These and other aspects of the present invention will now be described, by way of example only, with reference to the accompanying drawings, in which:
FIG. 1 is a side view of a two-wheeled motorized vehicle embodying the present invention;
FIG. 2 is a schematic structural view of a steering handle portion of the vehicle of FIG. 1;
FIG. 3 is an enlarged schematic structural view of a left grip portion of the steering handle;
FIG. 4 is a block diagram of a control system;
FIG. 5 is a conceptual illustration showing gear change modes;
FIG. 6 is a V-N line graph exemplarily shown for depicting shift changes in a manual MT mode;
FIG. 7 is a V-N line graph exemplarily shown for depicting shift changes in an automatic MT mode;
FIG. 8 is a general flowchart for a MT shift down mode;
FIG. 9 is a flowchart showing a specific first example of the MT shift down mode;
FIG. 10 is a flowchart showing a specific second example of the MT shift down mode;
FIG. 11 is a flowchart showing a specific third example of the MT shift down mode;
FIG. 12 is a flowchart showing a specific fourth example of the MT shift down mode;
FIG. 13 is a V-N line graph in the MT shift down mode;
FIG. 14 is a flowchart for the MT shift down mode in a first variation;
FIG. 15 is a schematic structural view of a steering handle in a second variation;
FIG. 16 is a block diagram of a control system in the second variation;
FIG. 17 is a flowchart for the MT shift down mode in the second variation;
FIG. 18 is a schematic structural view of a steering handle in a third variation; and
FIG. 19 is a block diagram of a control system in accordance with a second embodiment of the present invention.

### DETAILED DESCRIPTION OF THE DRAWINGS

### Embodiment 1

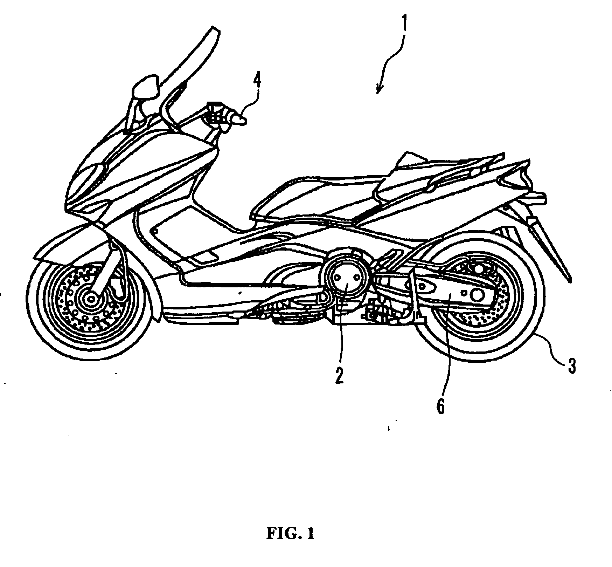

In this first embodiment, an example of the present invention is described by providing a motorcycle 1 in the form of a so-called scooter type. As shown in FIG. 1, the motorcycle 1 has a steering handle 4, a power unit 2 and a rear wheel 3 functioning as a drive wheel. The power unit 2 and the rear wheel 3 are connected to each other through a power transmission mechanism 6.

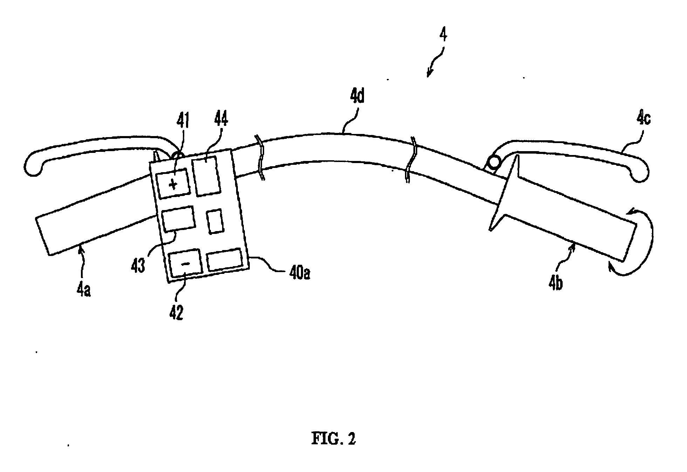

FIG. 2 is a schematic structural view of the steering handle 4. The steering handle 4 has a handle bar 4d coupled with a steering head pipe which is not shown. The steering handle 4 includes a left grip section 4a positioned at the left end of the handle bar 4d and a right grip section 4b positioned at the right end of the handle bar 4d. The right grip section 4b is pivotable relative to the handle bar 4d. When a rider pivots the right grip section 4b, a throttle valve which is not shown is operated to control a throttle opening.

Brake levers 4c are disposed adjacent to the respective grip sections 4a, 4b. When the rider operates the brake levers 4c, brakes (not shown) of the motorcycle 1 are actuated and, as described later, a brake signal 104 is outputted to an ECU 5.

A switch box 40a is disposed in a right side portion of the left grip section 4a. The switch box 40a has various operation switches such as, for example, a shift up switch 41, a shift down switch 42, a mode temporarily changing switch 43 and a mode selecting switch 44.

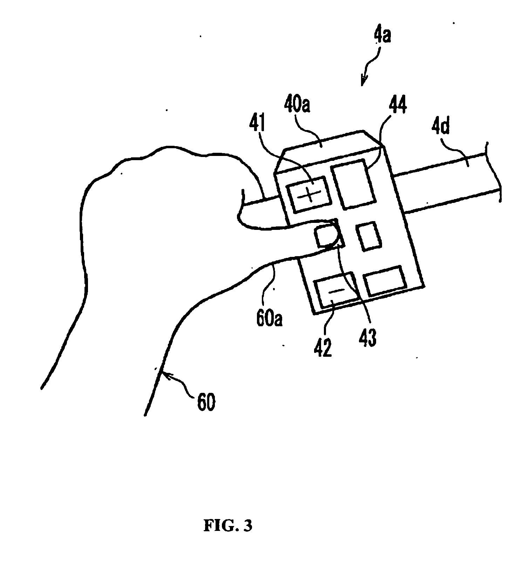

As shown in FIG. 3, the various operation switches such as the shift up switch 41, the shift down switch 42, the mode temporarily changing switch 43 and the mode selecting switch 44 are positioned at locations where the thumb 60a of the left hand 60 of the rider can operate them. More specifically, the various operation switches are arranged in a top surface slightly inclining downward toward a rear portion of the switch box 40a. That is, the various operation switches are arranged in a surface of the switch box 40a facing the rider.

The present invention, however, is not limited to this structure. For example, some of the operation switches such as, for example, the shift up switch 41 can be arranged in a rear surface of the switch box 40a in the view from the rider' s position so that those switches are operable by the forefinger. For example, it is applicable that the shift up switch 41 is arranged in the rear surface in the view from the rider's position while the shift down switch 42 is arranged in the surface facing the rider. In other words, it is applicable that the shift up switch 41 is operable by the forefinger while the shift down switch 42 is operable by the thumb 60a. Also, all of the operation switches can be arranged in the rear surface of the switch box 40a in the view from the rider's position to be operable by the forefinger.

In this embodiment, the various operation switches such as the shift up switch 41, the shift down switch 42, the mode temporarily changing switch 43 and the mode selecting switch 44 are formed with push type and so-called button type switches. However, the various operation switches can be formed with push type levers. Also, the various operation switches can be rotary type switches whose knobs are moved among multiple positions.

As shown in FIG. 3, the shift up switch 41, the shift down switch 42 and the mode temporarily changing switch 43 in the various operation switches are placed at positions closest to the left hand 60 of the rider. In other words, the shift up switch 41, the shift down switch 42 and the mode temporarily changing switch 43 are placed at outermost positions in the vehicle width direction. The mode temporarily changing switch 43 is positioned between the shift up switch 41 and the shift down switch 42. The mode selecting switch 44 is placed at a position spaced apart from the left hand 60 more than the shift up switch 41, the shift down switch 42 and the mode temporarily changing switch 43. This is because frequency in use of the mode selecting switch 44 is lower than those of the shift up switch 41, the shift down switch 42 and the mode temporarily changing switch 43. As thus described, it is preferable that the shift up switch 41, the shift down switch 42 and the mode temporarily changing switch 43 whose frequency in use is high are placed at the positions closer to the left hand 60 where the switches can be relatively easily operated.

Additionally, the place for the mode selecting switch 44 is not limited to the left grip section 4a. For example, the mode selecting switch 44 can be placed in the left side portion of the right grip section 4b. More specifically, a further switch box can be disposed in the left side portion of the right grip section 4b and the mode selecting switch 44 can be positioned in the further switch box. In this alternative arrangement, it is preferable that the mode selecting switch 44 is positioned at a location where the fore finger of the right hand of the rider can operate the switch 44.

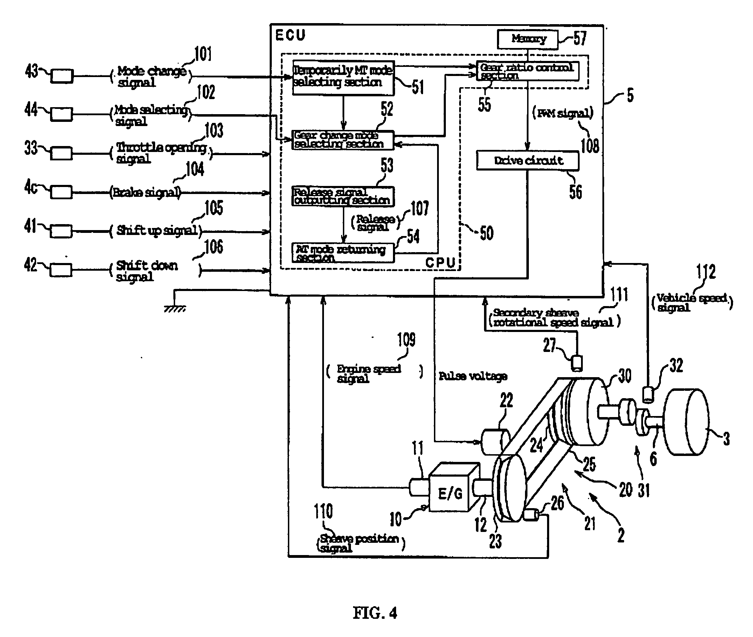

As shown in FIG. 4, an engine 10 functioning as a drive source, an electronically controlled transmission 20, a centrifugal clutch 30 and a speed reduction mechanism 31 are provided. The transmission 20 has a gear change mechanism 21 and an electric motor 22 functioning as an actuator. The motor 22 is used for changing a gear ratio of the gear change mechanism 21.

The gear change mechanism 21 has a primary sheave 23 and a secondary sheave 24. The primary sheave 23 is mounted to an output shaft 12 of the engine 10 and rotates together with the rotation of the output shaft 12. A belt 25 whose cross section generally has a V-shape is wound around the primary sheave 23 and the secondary sheave 24. The motor 22 is attached to the primary sheave 23. A width of a belt groove of the primary sheave 23 around which the belt 25 is wound is changed by the motor 22. Thereby, the gear ratio of the gear change mechanism 21 can be continuously changed. More specifically, the gear ratio of the gear change mechanism 21 can be steplessly changed.

The secondary sheave 24 is connected to the speed reduction mechanism 31 through the centrifugal clutch 30. The speed reduction mechanism 31 is connected to the rear wheel 3 through the power transmission mechanism 6 formed with a belt, a chain, a drive shaft, etc.

The centrifugal clutch 30 is connected or disconnected in accordance with a rotational speed of the secondary sheave 24. More specifically, the centrifugal clutch 30 is under the disconnected condition if the rotational speed of the secondary sheave 24 is less than a predetermined rotational speed. Therefore, the rotation of the secondary sheave 24 is not transmitted to the rear wheel 3. On the other hand, the centrifugal clutch 30 is under the connected condition if the rotational speed of the secondary sheave 24 is equal to or greater than the predetermined rotational speed. Therefore, the rotation of the secondary sheave 24 is transmitted to the rear wheel 3 through the centrifugal clutch 30, the speed reduction mechanism 31 and the power transmission mechanism 6. Thereby, the rear wheel 3 is rotated.

A control block of the motorcycle 1 will now be described with reference to FIG. 4. As shown in FIG. 4, the motorcycle 1 is mainly controlled by the ECU (electronic control unit) 5 as a control system. The ECU 5 includes: a memory 57 storing various settings; a CPU (central processing unit) 50 as a calculating section and a drive circuit 56. The CPU 50 has an MT mode temporarily selecting section 51, a change mode selecting section 52, a release signal outputting section 53, an AT mode returning section 54 and a gear ratio control section 55.

Various sensors and switches or the like are connected to the ECU 5. More specifically, a mode temporarily changing switch 43, a mode selecting switch 44, a shift up switch 41, a shift down switch 42, a throttle opening sensor 33, a brake lever 4c, an engine speed sensor 11, a sheave position detecting sensor 26, a secondary sheave rotational speed sensor 27 and a vehicle speed sensor 32 are connected to the ECU 5.

The mode temporarily changing switch 43 outputs a mode change signal 101 to the ECU 5 when operated by the rider. The mode selecting switch 44 outputs a mode selection signal 102 to the ECU 5 when operated by the rider. The throttle opening sensor 33 detects a throttle opening of the motorcycle 1. The throttle opening sensor 33 outputs the throttle opening that is detected to the ECU 5 as a throttle opening signal 103. The brake lever 4c outputs a brake signal 104 to the ECU 5 when operated by the rider. The shift up switch 41 outputs a shift up signal 105 to the ECU 5 when operated by the rider. The shift down switch 42 outputs a shift down signal 106 to the ECU 5 when operated by the rider.

The engine speed sensor 11 detects a rotational speed of the engine 10. The engine speed sensor 11 outputs the detected rotational speed of the engine 10 to the ECU 5 as an engine speed signal 109.

The sheave position detecting sensor 26 is a sensor for detecting a gear ratio of the gear change mechanism 21. More specifically, the sheave position detecting sensor 26 detects a width of the belt groove of the primary sheave 23. For example, if the primary sheave 23 is formed with a fixed sheave body and a movable sheave body movable relative to the fixed sheave body as embodied in this embodiment, the sheave position detecting sensor 26 detects a position of the movable sheave body relative to the fixed sheave body. The sheave position detecting sensor 26 outputs a position of the movable sheave body to the ECU 5 as a sheave position signal 110.

The secondary sheave rotational speed sensor 27 detects the rotational speed of the secondary sheave 24. The secondary sheave rotational speed sensor 27 outputs the detected rotational speed of the secondary sheave 24 to the ECU 5 as a secondary sheave rotational speed signal 111.

The vehicle speed sensor 32 detects a vehicle speed of the motorcycle 1. The vehicle speed sensor 32 outputs the detected vehicle speed to the ECU 5. Additionally, the vehicle speed sensor 32 can be a sensor which detects a rotational speed of the rear wheel 3. However, the vehicle speed sensor 32 can be, for example, another sensor that detects a vehicle speed by detecting a rotational speed of the output shaft of the speed reduction mechanism 31. Also, the vehicle speed sensor 32 can be a further sensor which detects a vehicle speed by detecting a rotational speed of the front wheel.

The ECU 5 controls the engine 10. More specifically, the ECU 5 calculates an engine speed which is a target value based upon the throttle opening signal 103, the vehicle speed signal 112, etc. The ECU 5 controls the rotational speed or the like of the engine 10 to be the target engine speed by controlling ignition timing of an ignition system (not shown) of the engine 10, a fuel supply amount to the engine 10 and others while monitoring the engine speed signal 109.

Also, the ECU 5 controls the transmission 20. More specifically, the ECU 5 calculates a gear ratio which is a target value using the engine speed signal 109, the vehicle speed signal 112, etc. The ECU 5 determines a current gear ratio of the transmission 20 using the sheave position signal 110, etc. The ECU 5 outputs a PWM (pulse-width modulation) signal 108 to the drive circuit 56 based upon the calculated target gear ratio and the determined current gear ratio. The drive circuit 56 applies a pulse voltage to the motor 22 in response to the inputted PWM signal 108. Thereby, the gear ratio of the transmission 20 is controlled to be the target gear ratio.

In this embodiment, an example in which the motor 22 controlled in the manner of PWM is used as an actuator for changing the gear ratio of the gear change mechanism 21 will be described. In the present invention, however, types of the actuator changing the gear ratio of the transmission 20 are not limited. For example, the actuator changing the gear ratio of the transmission 20 can be an electric motor controlled in a manner of PAM (pulse amplitude modulation). Also, the actuator changing the gear ratio of the transmission 20 can be a stepper motor. Also, the actuator changing the gear ratio of the transmission 20 can be a hydraulic actuator or the like.

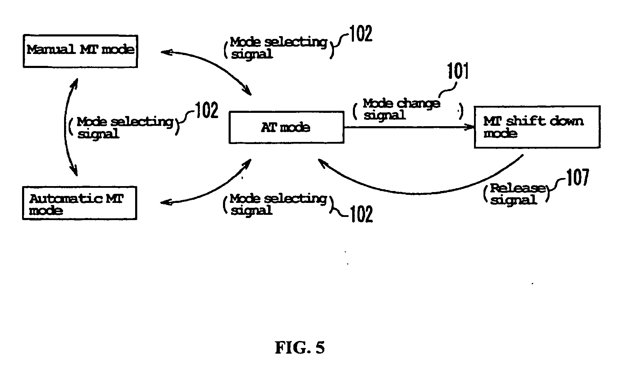

Hereunder, the control of the gear ratio of the transmission 20 will be described in greater detail. First, with reference to FIG. 5, etc. , selection of gear change modes will be described.

In the motorcycle 1, an AT mode, a manual MT mode and an automatic MT mode are selectable. As shown in FIG. 5, one of the AT mode, the manual MT mode and the automatic MT mode can be selected by the rider's operation of the mode selecting switch 44.

As shown in FIG. 4, when the rider operates the mode selecting switch 44, a mode selection signal 102 is outputted to the ECU 5 from the mode selecting switch 44. More specifically, the mode selection signal 102 is outputted to the gear change mode selecting section 52 of the ECU 5. When the mode selection signal 102 is inputted to the gear change mode selecting section 52, the gear change mode is changed from a current gear change mode as shown in FIG. 5. For example, if the current gear change mode is the AT mode, the gear change mode is changed to the automatic MT mode by the rider' s operation of the mode selecting switch 44 once. When the rider operates the mode selecting switch 44 once more, the gear change mode is changed to the manual MT mode from the automatic MT mode this time. When the rider operates the mode selecting switch 44 further once more, the gear change mode changes to the AT mode, which was selected before, from the manual MT mode. That is, the gear change modes change in turn whenever the mode selecting switch 44 is operated and the mode selection signal 102 is outputted. When the gear change mode changes as thus described, the gear ratio control section 55 controls the gear ratio of the transmission 20 in accordance with the changed gear change mode.

In this embodiment, an example in which the gear change modes change in turn whenever the mode selecting switch 44 is operated is described. Alternatively, for example, a mode selecting switch for selecting the AT mode and another mode selecting switch for selecting the automatic MT mode, and further another mode selecting switch for selecting the manual MT mode can be separately provided.

The AT mode is a mode in which the gear ratio of the transmission 20 is continuously and automatically changed by the gear change ratio control section 55 in accordance with running states of the motorcycle 1. In other words, the "AT mode" is a mode in which the gear ratio of the transmission 20 is automatically changed without steps in accordance with the running states of the motorcycle 1. For example, the "AT mode" can be a mode in which the gear ratio of the transmission 20 is continuously and automatically changed based upon a predetermined gear ratio map.

The memory 57 in the ECU 5 stores a gear ratio map defining relationships between the running states of the motorcycle 1 such as vehicle speed, the engine speed, and the throttle opening of the motorcycle 1, and the gear ratio. The gear ratio control section 55 shown in FIG. 4 calculates the target gear ratio based upon the gear ratio map, and the vehicle speed signals 112, the engine speed signals 109, etc. The gear ratio control section 55 outputs a PWM signal 108 which is based upon the calculated target gear ratio, the sheave position signal 110 and the secondary sheave rotational speed signal 111 to the drive circuit 56. The drive circuit 56 applies a pulse voltage corresponding to the PWM signal 108 to the motor 22. Thereby, the motor 22 is driven and the width of the belt groove of the primary sheave 23 is adjusted. As a result, the gear ratio of the transmission 20 is changed to the target gear ratio.

On the other hand, the MT mode is a mode in which the gear ratio of the transmission 20 is automatically or manually changed among predetermined multiple gear ratios. In the MT mode, a mode in which the gear ratio of the transmission 20 is changed by the rider's operation of the operation switches such as the shift up switch 41, the shift down switch 42 or the like is the "manual MT mode." That is, in the "manual MT mode," the shift changes are made by the rider. Additionally, the "MT mode" can be called a fake MT mode to be distinguished from the normal manual transmission mode in which gear ratios are physically changed among multiple gears.

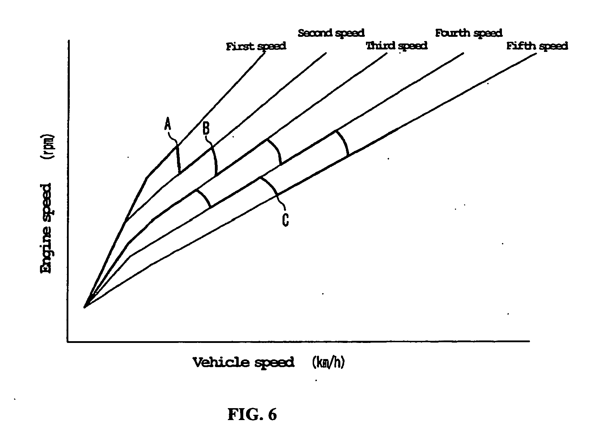

More specifically, as shown in FIG. 6, five substantially fixed gear ratios, i.e., a first speed, a second speed, a third speed, a fourth speed and a fifth speed are set in this order from the lowest speed in this embodiment. Additionally, the respective gear ratios of the first through fifth speeds can be completely fixed. Alternatively, the gear ratios can be changed, for example, in accordance with the engine speed. More specifically, the respective gear ratios of the first through fifth speeds can be set in such a manner, for example, that the gear ratio is positioned closer to the top speed as the engine speed becomes higher. In the manual MT mode, in principle, the gear ratio does not change unless the rider operates the operation switch such as the shift up switch 41, the shift down switch 42 or the like. In other words, in the manual MT mode, in principle, the gear ratio is not automatically changed among the respective gear ratios of the transmission 20 unless the rider operates the operation switch such as the shift up switch 41, the shift down switch 42 or the like. However, the shift down operation can be exceptionally forcibly and automatically made for purposes such as, for example, for avoiding an engine stall under a deceleration condition, or the like, of the motorcycle 1.

Describing, for example, with the case represented by FIG. 6, if the motorcycle 1 starts to run at the first speed, the gear ratio of the transmission 20 stays at the first speed before the shift up switch 41 is operated. If the rider operates the shift up switch 41 at point A, a shift up signal 105, as shown in FIG. 4, is outputted to the ECU 5 from the shift up switch 41. When the shift up signal 105 is inputted into the ECU 5, the gear ratio control section 55 of the ECU 5 outputs a PWM signal 108 for changing the gear ratio of the transmission 20 to the second speed from the first speed to the drive circuit 56. The drive circuit 56 applies a pulse voltage corresponding to the PWM signal 108 to the motor 22. Thereby, as shown in FIG. 6, the gear ratio of the transmission 20 changes to the second speed. Similarly, if the shift up switch 41 is further operated at point B, the gear ratio of the transmission 20 changes to the third speed.

On the other hand, if the shift down switch 42 is operated, for example, at point C, a shift down signal 106, as shown in FIG. 4, is outputted to the ECU 5 from the shift down switch 42. When the shift down signal 106 is inputted into the ECU 5, the gear ratio control section 55 of the ECU 5 outputs a PWM signal 108 for changing the gear ratio of the transmission 20 to the fourth speed from the fifth speed to the drive circuit 56. The drive circuit 56 applies a pulse voltage corresponding to the PWM signal 108 to the motor 22. Thereby, as shown in FIG. 6, the gear ratio of the transmission 20 changes to the fourth speed from the fifth speed.

In the MT mode, a mode in which the gear ratio of the transmission 20 is automatically changed among the predetermined multiple gear ratios by the gear ratio control section 55 without any operations by the rider is defined as the "automatic MT mode."

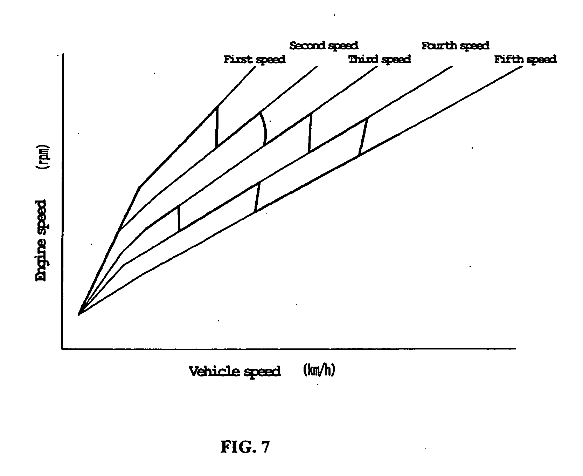

For example, as shown in FIG. 7, if the automatic MT mode is selected by the gear change mode selecting section 52, the gear ratios of the transmission 20 are automatically changed in accordance with changes of the running states of the motorcycle 1 without any operations by the rider. However, in the automatic MT mode, the gear ratio is not continuously changed, differently from the AT mode. In other words, in the automatic MT mode, the gear ratio is not changed steplessley, unlike the AT mode. That is, in the automatic MT mode, the gear ratio of the transmission 20 is automatically changed among the predetermined gear ratios.

Additionally, in the automatic MT mode, shift change timing is set to be different in accordance with, for example, the throttle opening or the like. More specifically, if the rider greatly opens the throttle valve (i.e., throttle opening: large) to relatively promptly accelerate the motorcycle, the shift change is made at a relatively high engine speed. On the other hand, if the rider slightly opens the throttle valve (i.e., throttle opening: small) to relatively slowly accelerate the motorcycle, the shift change is made at a relatively low engine speed. In the shift down operation, similarly to the shift up operation, shift change timing is set to be different in accordance with, for example, the throttle opening or the like.

In this embodiment, as shown in FIG. 5, when a mode change signal 101 is outputted from the mode temporarily changing switch 43 in the AT mode, the MT shift down mode is temporarily selected. Along with this selection, the gear ratio of the transmission 20 is changed to one of the gear ratios existing in a LOW range which is lower than a current gear ratio of the transmission 20 within the predetermined multiple gear ratios (the first speed through the fifth speed) by the gear ratio control section 55. If the mode temporarily changing switch 43 is operated by the rider in the MT shift down mode, the gear ratio is changed to a gear ratio in a LOW range which is further lower than the current gear ratio of the transmission 20. When a release signal 107 is outputted from the release signal outputting section 53 shown in FIG. 4 in the MT shift down mode, the mode returns to the AT mode from the MT shift down mode.

For example, in the MT mode, the rider can optionally change the gear ratio of the transmission 20. To the contrary, in the AT mode, the rider is not able to optionally change the gear ratio of the transmission 20 because the gear ratio of the transmission 20 is automatically changed. The MT shift down mode is the gear change mode that is set under the circumstances so that a kick down operation or activation of engine brake are enabled with the rider's simple operation in the state that the AT mode is selected.

In this embodiment, an example will be described in which, by the gear ratio control section 55, the gear ratio of the transmission 20 is changed to a gear ratio which is the closest to the current gear ratio of the transmission 20 and exists in a LOW range which is lower than the current gear ratio of the transmission 20 within the predetermined multiple gear ratios (the first speed through the fifth speed). However, the present invention is not limited to the example. For example, by the gear ratio control section 55, the gear ratio of the transmission 20 can be changed to a gear ratio which is further from the current gear ratio of the transmission 20 than the gear ratio that is the closest to the current gear ratio of the transmission 20 existing in the LOW range that is lower than the current gear ratio of the transmission 20 within the predetermined multiple gear ratios (the first speed through the fifth speed).

More specifically, by the gear ratio control section 55, the gear ratio of the transmission 20 can be changed to a gear ratio which is further from the current gear ratio of the transmission 20 by one stage more than the gear ratio that is the closest to the current gear ratio of the transmission 20 existing in the LOW range that is lower than the current gear ratio of the transmission 20 within the predetermined multiple gear ratios (the first speed through the fifth speed). Furthermore, by the gear ratio control section 55, the gear ratio of the transmission 20 can be changed to a gear ratio which is further from the current gear ratio of the transmission 20 by two stages or more, more than the gear ratio that is the closest to the current gear ratio of the transmission 20 existing in the LOW range that is lower than the current gear ratio of the transmission 20 within the predetermined multiple gear ratios (the first speed through the fifth speed).

Alternatively, the rider can set shift down amounts. For example, if the rider desires to make a relatively quick drive, the rider can select a mode having a large shift down amount. If the rider desires to make a relatively slow drive, the rider can select a mode having a small shift down amount. Furthermore, multiple mode temporarily changing switches 43 can be provided. For example, a mode temporarily changing switch 43 whose shift down amount is relatively small and another mode temporarily changing switch 43 whose shift down amount is relatively large can be provided.

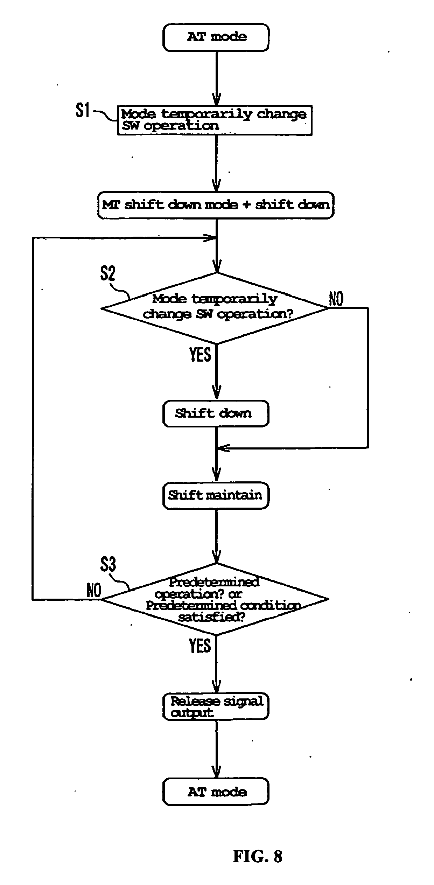

Hereunder, mainly referring to FIGs. 8-13, the MT shift down mode will be described in greater detail. Herein, an example in which the MT shift down mode is a manual gear change mode in which the gear ratio of the transmission 20 is changed among the predetermined multiple gear ratios (the first speed through the fifth speed) by the gear ratio control section 55 in response to the rider's operation of the operation switches will be described. However, the MT shift down mode can be a gear change mode in which the gear ratio of the transmission 20 is automatically changed among the predetermined multiple gear ratios (the first speed through the fifth speed) by the gear ratio control section 55 in accordance with the running states of the motorcycle 1.

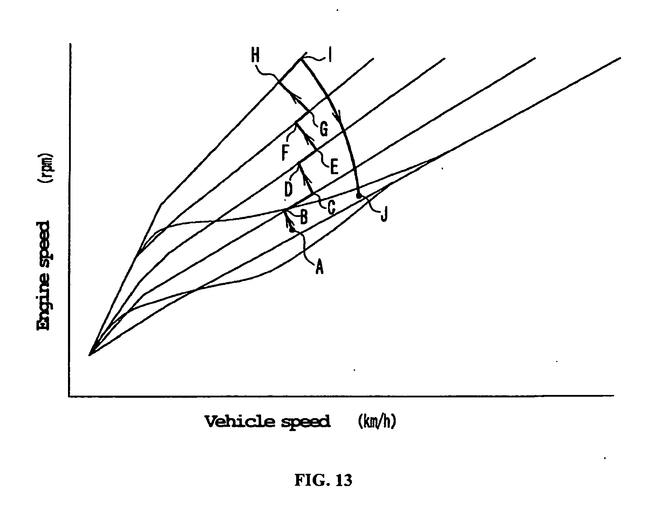

As shown in FIG. 8, if the mode temporarily changing switch 43 is operated at a step S1 while the AT mode is selected by the gear change mode selecting section 52, the MT shift down mode is temporarily selected. More specifically, a mode change signal 101 is outputted to the MT mode temporarily selecting section 51 of the ECU 5. When the mode change signal 101 is inputted into the MT mode temporarily selecting section 51, the MT mode temporarily selecting section 51 commands the gear change mode selecting section 52 to select the MT shift down mode. Thereby, the MT shift down mode is selected by the gear change mode selecting section 52. Along with this selection, by the gear ratio control section 55, the gear ratio of the transmission 20 is changed to a gear ratio which is the closest to the current gear ratio of the transmission 20 and exists in a LOW range which is lower than the current gear ratio of the transmission 20 within the predetermined multiple gear ratios (the first speed through the fifth speed). For example, as shown in FIG. 13, if the mode change signal 101 is outputted at point A positioned between the fifth speed and the fourth speed, the gear ratio is changed to point B representing the fourth speed.

Additionally, in this embodiment, if the gear ratio of the transmission 20 given when the mode temporarily changing switch 43 is operated is consistent with one of the predetermined multiple gear ratios (the first speed through the fifth speed), the gear ratio consistent with the current gear ratio of the transmission 20 within the predetermined multiple gear ratios (the first speed through the fifth speed) is maintained. On this occasion, the shift down operation is not substantially made in the operating time of the mode temporarily changing switch 43. However, because, afterwards, the gear ratio of the transmission 20 is maintained at the current gear ratio, the shift down operation is made later by comparing with the AT mode in which the gear ratio is changing toward the shift up range.

As shown in FIG. 8, if it is determined that the mode temporarily changing switch 43 is operated in the MT shift down mode, the shift down operation is made (step S2). For example, if the mode temporarily changing switch 43 is operated at point C of FIG. 13, a mode change signal 101 is outputted to the ECU 5. When the mode change signal 101 is outputted to the ECU 5, the gear ratio is shifted down to a gear ratio (the third speed, point D) existing in a LOW range which is lower than the current gear ratio (the fourth speed) of the transmission 20 from the current gear ratio by the gear change ratio control section 55.

After the shift down operation, the downwardly shifted gear ratio is maintained. Next, at a step S3, the ECU 5 determines whether a predetermined operation is made to the motorcycle 1 and whether a predetermined condition is satisfied in connection with the motorcycle 1. If the ECU 5 determines that the predetermined operation is made to the motorcycle 1 and the predetermined condition is satisfied in connection with the motorcycle 1, a release signal 107, as shown in FIG. 4, is outputted to the AT mode returning section 54 from the release signal outputting section 53. When the release signal 107 is inputted to the AT mode returning section 54, the AT mode returning section 54 makes the gear change mode selected by the change mode selecting section 52 return to the AT mode.

On the other hand, if, at the step S3, the ECU 5 determines that the predetermined operation is not made to the motorcycle 1 and the predetermined condition is not satisfied in connection with the motorcycle 1, the ECU returns to the step S2 to determine whether the mode temporarily changing switch 43 is operated or not. Therefore, if the mode temporarily changing switch 43 is operated in the MT shift down mode, the shift down operation is further made. That is, whenever the mode temporarily changing switch 43 is operated in the MT shift down mode, the shift down operation is made.

More specifically, if the mode temporarily changing switch 43 is operated at point E indicated in FIG. 13 after the gear ratio is shifted down to the third speed as described above, the gear ratio is shifted down to a gear ratio (the second speed, point F) existing in a LOW range which is lower than the current gear ratio (the third speed) from the current gear ratio. Moreover, if the mode temporarily changing switch 43 is operated at point G indicated in FIG. 13, the gear ratio is shifted down to a gear ratio (the first speed, point H) existing in a LOW range which is lower than the current gear ratio (the second speed) from the current gear ratio. If the ECU 5 makes, for example, a predetermined operation to the motorcycle 1 at point I, the mode returns to the AT mode from the MT shift down mode and the gear ratio is shifted up to, for example, point J.

The "predetermined condition" and the "predetermined operation" determined at the step S3 are not specifically limited to any ones if they can be used for determining that the rider no longer has an intention for acceleration or no longer has an intension for activation of engine brake, or that such intensions become weaker.

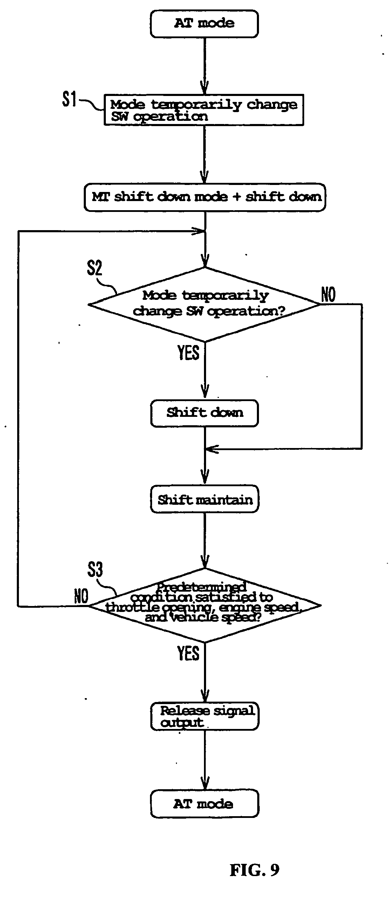

For example, as exemplarily shown in FIG. 9, the gear change mode can return to the AT mode when at least one of the throttle opening, the engine speed and the vehicle speed satisfies a predetermined condition. More specifically, the gear change mode can return to the AT mode when the throttle opening reaches a preset opening or falls below the preset opening or when the throttle opening returns to the opening given when the MT shift down mode was selected. The gear change mode can return to the AT mode if the throttle opening is continuously kept at a constant value during a preset period of time.

Also, the gear change mode can return to the AT mode when the engine speed reaches a preset rotational speed or exceeds the preset rotational speed. More specifically, the gear change mode can return to the AT mode when the engine speed reaches a revolution limit.

The gear change mode can return to the AT mode when the vehicle speed reaches a preset speed or exceeds the preset speed. The gear change mode can return to the AT mode when a vehicle acceleration value obtained by differentiating the vehicle speed with respect to time reaches a preset vehicle acceleration value or falls below the vehicle acceleration value.

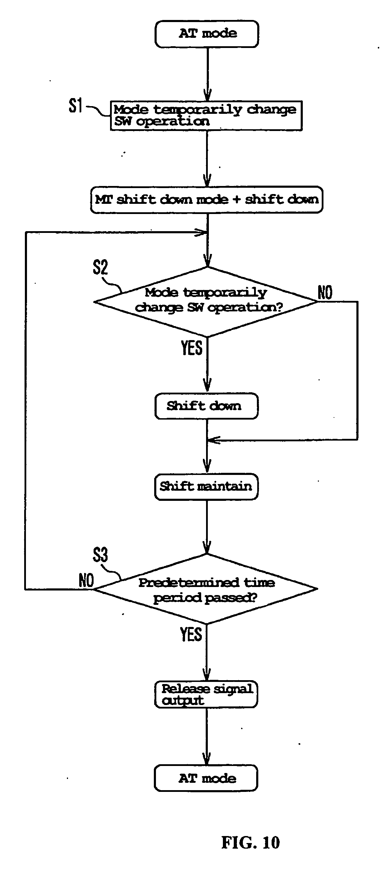

Also, as shown, for example, in FIG. 10, the gear change mode can return to the AT mode when a preset period of time elapses after the MT shift down mode has been selected by the MT mode temporarily selecting section 51. More specifically, the gear change mode can return to the AT mode when a period of three to 120 seconds elapses after the MT shift down mode has been selected by the MT mode temporarily selecting section 51.

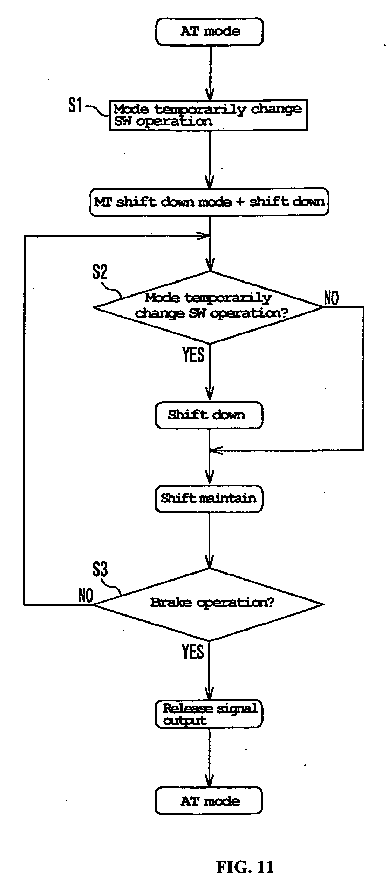

As shown, for example, in FIG. 11, the gear change mode can return to the AT mode when, in the MT shift down mode, the brake lever is operated by the rider and a brake signal 104 is outputted to the ECU 5 or when the brake signal 104 is released after the brake signal 104 has been outputted to the ECU 5.

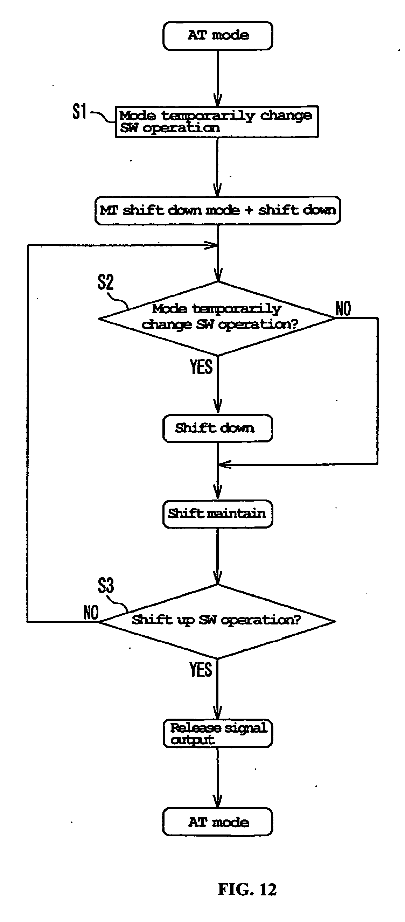

Furthermore, as shown, for example, in FIG. 12, the gear change mode can return to the AT mode when, in the MT shift down mode, the shift up switch 41 is operated by the rider and a shift up signal 105 is outputted to the ECU 5.

In this embodiment, when the rider simply operates the mode temporarily changing switch 43 in the AT mode, the MT shift down mode can be selected. Therefore, the rider can easily and promptly make the shift down operation by means of the simple and only one switch operation, i.e., the rider only operates the mode temporarily changing switch 43 once. The rider thus can easily and promptly make a kick down operation or activation of engine brake.

For example, in a conventional motorcycle in which both of the AT mode and the MT mode are selectable, the shift down operation can be made. However, in the case of the conventional motorcycle, at least the following two operations are necessary to shift down the gear ratio of the transmission.
1. Operation of the mode selection switch to shift from AT mode to MT mode.
2. Operation of the shift down switch to perform a shift down.

Accordingly, not only the operation of the gear ratio of the transmission is complicated but also the shift down operation is difficult to be promptly made. To the contrary, in this embodiment, as discussed above, the shift down operation can be easily and promptly made in the AT mode by means of a single operation such as an operation of the mode temporarily change switch 43.

Additionally, as a manner for enabling the kick down operation or the activation of engine brake with a simple operation by the rider, a manner can be proposed such that, in the AT mode, a kick down mode in which the transmission 20 is controlled using a target gear ratio shifted to a LOW range by a certain amount from the gear ratio calculated out from the gear change map is set. This manner can make the kick down operation only by an operation of a switch for shifting to the kick down mode. However, the kick down mode is the AT mode eventually. Hence, if a brisk kick down operation having a direct sense or a deceleration whose engine brake effect is large is required, such a kick down operation has difficulty to sufficiently meet the requirement.

To the contrary, in this embodiment, the mode changes to the MT shift down mode when the mode temporarily changing switch 43 is operated. Then, the shift down operation is made in the MT mode. Therefore, according to this embodiment, the brisk kick down operation having a fixed gear change sense and the direct sense or the deceleration by engine brake can be made.

In this embodiment, the mode automatically returns to the AT mode from the MT shift down mode when the predetermined operation is made to the motorcycle 1 and when the predetermined condition is satisfied in connection with the motorcycle 1. That is, in this embodiment, in the AT mode, the temporal shift down operation in the MT mode can be made by the operation that can be made easily and promptly. Therefore, acceleration for overtaking another vehicle or performing a similar operation while running in the AT mode and deceleration for activating engine brake can be very easily made. Thereby, quite high drivability can be realized whereby an easy drive can be made because normally no shift change is necessary and thus no complicated shift change is required, and also whereby, meanwhile, if the rider desires to accelerate or decelerate his or her vehicle relatively strongly, the rider can select the MT shift down mode with the simple operation to briskly accelerate or decelerate the vehicle.

Particularly, the mode can return to the AT mode without any specific operation being made by the rider, if it is set that the mode returns to the AT mode when at least one of the throttle opening, the engine speed and the vehicle speed satisfies the predetermined condition as shown in FIG. 9, or if it is set that the mode returns to the AT mode when the preset period of time elapses after the MT shift down mode has been selected by the MT mode temporarily selecting section 51 as shown in FIG. 10. Therefore, the return to the AT mode can be especially easily made. Also, in this case, the mode surely return to the AT mode because no specific operation is necessary for returning to the AT mode. That is, omission regarding the return to the AT mode due to the rider's carelessness or the like can be avoided.

Also, if it is set that the mode returns to the AT mode when the brake lever 4c is operated by the rider in the MT shift down mode as shown in FIG. 11, or if it is set that the mode returns to the AT mode when the shift up switch 41 is operated by the rider in the MT shift down mode, as shown in FIG. 12 the MT shift down mode continues unless the intension of the rider to make the shift down disappears, while the mode surely returns to the AT mode when the rider desires to return to the AT mode. That is, the intension of the rider can be more accurately reflected.

In this embodiment, if the rider further operates the mode temporarily changing switch 43 in the MT shift down mode, the mode is further shifted down. Thus, a further shift down operation is practicable if, for example, the rider judges that the shift down amount is insufficient only by putting the mode into the MT shift down mode. That is, the rider can more freely operate the motorcycle 1.

Alternatively, in this embodiment, the further shift down operation can be made by the rider's operation of the shift down switch 42 in the MT shift down mode.

Also, the gear ratio of the transmission 20 can be shifted up when the shift up switch 41 is operated in the MT shift down mode.

In this embodiment, the various switches such as the mode temporarily changing switch 43 are push type switches. The rider thus can easily operate the operation switches. Although each operation switch is formed with a button type switch in this embodiment, the operation switch can be a lever type switch, or the like.

In this embodiment, the various switches such as the mode temporarily changing switch 43 are operable by the rider's thumb 60a. The rider's thumb 60a is, comparatively, relatively freely movable rather than the other fingers in the steering operation of the motorcycle 1. Therefore, the operability of the various switches such as the mode temporarily changing switch 43 is enhanced. Particularly, the thumb can be more easily moved than the other fingers when the rider grasps the brake lever 4c. Simultaneous operations of the brake and the various switches thus can be relatively easily made.

Also, in this embodiment, the various switches such as the mode temporarily changing switch 43 are disposed in the left grip section 4a on the opposite side to the right grip section 4b where the rider operates the throttling member. Therefore, the rider can relatively easily operate the operation switches while simultaneously operating the throttling member.

In this embodiment, the two kinds of MT modes, i.e., the manual MT mode and the automatic MT mode are selectable. The rider thus can make the shift change at his or her will by selecting the manual MT mode. On the other hand, if the rider prefers the shift change that has a higher direct sense and more MT taste but does not prefer making the shift change, the rider can select the automatic MT mode to automatically make the fake MT shift change.

### Variation 1

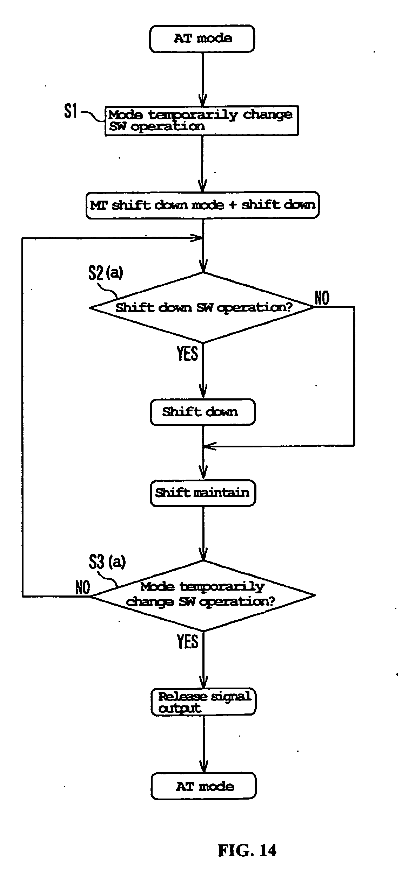

In the above embodiment, the example in which the further shift down operation is made following the operation of the mode temporarily changing switch 43 in the MT shift down mode is described. However, as shown in FIG. 14, the further shift down operation can be made following an operation of the shift down switch 42 by the rider and the mode can return to the AT mode following the operation of the mode temporarily changing switch 43 in the MT shift down mode.

### Variation 2

In the above embodiment, the example in which the mode temporarily changing switch 43 is separately provided and the mode changes to the MT shift down mode following the operation of the mode temporarily changing switch 43 is described. However, the present invention is not limited to the construction. In the second variation, an example in which the mode temporarily changing switch 43 is not separately provided and the mode changes to the MT shift down mode following the operation of the shift down switch 42 will be described.

Additionally, in the description of this variation, FIG. 1 is referred in common with the above embodiment. Also, the same components are assigned with the same numerals and/or symbols and further descriptions are omitted.

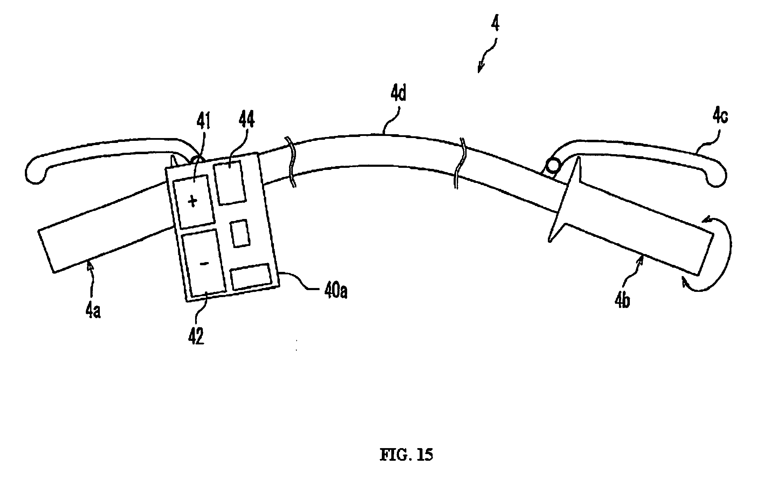

FIG. 15 is a schematic structural view of a steering handle 4 portion in this variation 2. The switch box 40a in this second variation does not have the mode temporarily changing switch 43. The left side of the switch box 40a only has the shift up switch 41 and the shift down switch 42. Because the number of switches disposed in the left side portion of the switch box 40a is relatively few, the shift up switch 41 and the shift down switch 42 are larger than those provided in the above embodiment.

Additionally, the place for the mode selecting switch 44 is not limited to the left grip section 4a. For example, the mode selecting switch 44 can be placed in the left side portion of the right grip section 4b. More specifically, a further switch box can be disposed in the left side portion of the right grip section 4b and the mode selecting switch 44 can be positioned in the further switch box. In this alternative, it is preferable that the mode selecting switch 44 is positioned at a location where the fore finger of the right hand of the rider can operate the switch 44.

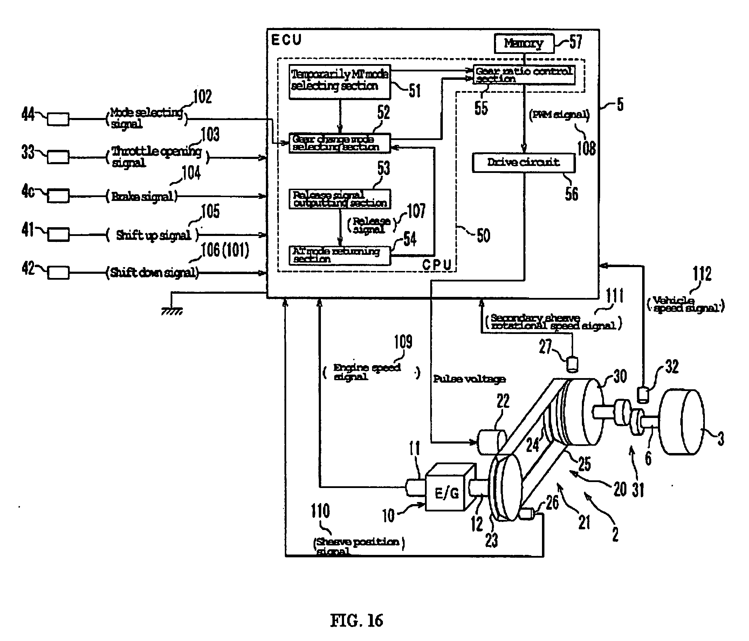

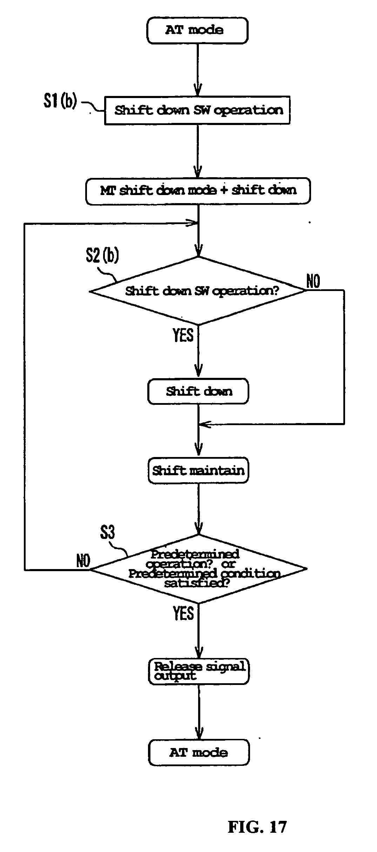

As shown in FIG. 16, in this second variation, the shift down signal 106 outputted when the shift down switch 42 is operated in the AT mode is the mode change signal 101. That is, as shown in FIG. 17, when the shift down switch 42 is operated by the rider at a step S1(b) in the AT mode, the shift down signal 106 functioning as the mode change signal 101 is outputted to the ECU 5. When the shift down signal 106 is inputted to the ECU 5, the MT shift down mode is selected by the MT mode temporarily selecting section 51. Along with this selection, the gear ratio of the transmission 20 is changed to one of the gear ratios existing in a LOW range which is lower than a current gear ratio of the transmission 20 within the predetermined multiple gear ratios (the first speed through the fifth speed) by the gear ratio control section 55.

In this second variation, when the shift down switch 42 is operated in the MT shift down mode, the shift down operation is made (step S2(b)).

In this second variation, following the operation of the shift down switch 42, the mode changes to the MT shift down mode and a further shift down operation in the MT shift down mode is made. Therefore, the mode temporarily changing switch 43 is not necessary to be provided and, to the extent of the size thereof, the shift up switch 41 and the shift down switch 42 can be upsized. Thereby, the operability for the rider is enhanced. Also, because the number of the operation switches decreases, the rider can more easily operate them.

### Variation 3

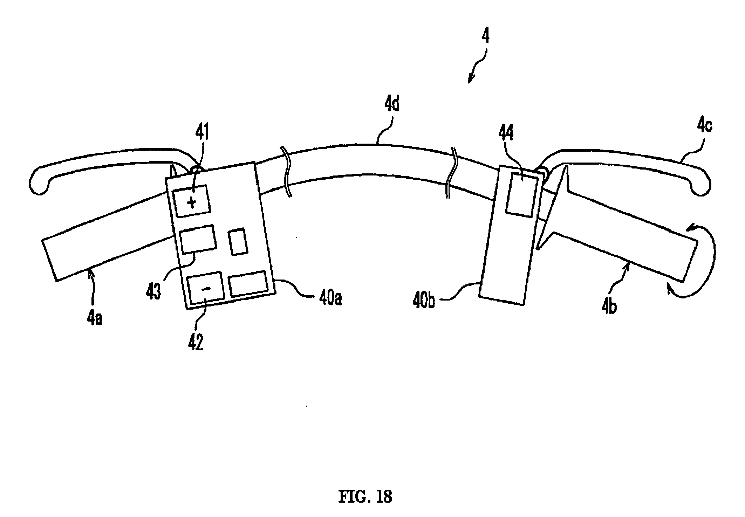

In the above embodiment, the example in which the mode selecting switch 44 is placed in the switch box 40a disposed in the left grip section 4a is described. However, the place for the mode selecting switch 44 is not limited to the left grip section 4a. For example, as shown in FIG. 18, the mode selecting switch 44 can be placed in the left side portion of the right grip section 4b. More specifically, a further switch box 40b can be disposed in the left side portion of the right grip section 4b and the mode selecting switch 44 can be positioned in the further switch box. As shown in FIG. 18, preferably, the mode selecting switch 44 is positioned at a location where the rider can operate the switch with the forefinger of the right hand.

### Other variations

In the above embodiment, a case in which the belt type ECVT is used as the electronically controlled transmission is described. However, the electronically controlled transmission can be an ECVT other than the belt type. For example, the electronically controlled transmission can be a toroidal type ECVT.

In the above embodiment, an example of embodiments of the present invention is described with reference to a scooter type motorcycle 1. However, the present invention is not limited to such a motorcycle 1. The straddle type vehicle in accordance with the present invention can include motorcycles such as, for example, the so-called motorcycle, a moped and an off-road vehicle. Also, the straddle type vehicle can be an ATV (all terrain vehicle) or the like.

In the above embodiment, the example in which the various operation switches such as the shift up switch 41, the shift down switch 42, the mode temporarily changing switch 43 and the mode selecting switch 44 are formed with push type and so-called button type switches. However, the various operation switches can be formed with push type levers. Also, the various operation switches can be rotary type switches whose knobs are moved among multiple positions.

In the above embodiment, the example is described in which, by the gear ratio control section 55, the gear ratio of the transmission 20 is changed to a gear ratio which is the closest to the current gear ratio of the transmission 20 and exists in a LOW range which is lower than the current gear ratio of the transmission 20 within the predetermined multiple gear ratios (the first speed through the fifth speed). However, the present invention is not limited to the example. For example, by the gear ratio control section 55, the gear ratio of the transmission 20 can be changed to a gear ratio which is further closer to the current gear ratio of the transmission 20 more than the gear ratio that is the closest to the current gear ratio of the transmission 20 existing in the LOW range that is lower than the current gear ratio of the transmission 20 within the predetermined multiple gear ratios (the first speed through the fifth speed). More specifically, by the gear ratio control section 55, the gear ratio of the transmission 20 can be changed to a gear ratio which is further closer to the current gear ratio of the transmission 20 by one stage more than the gear ratio that is the closest to the current gear ratio of the transmission 20 existing in the LOW range that is lower than the current gear ratio of the transmission 20 within the predetermined multiple gear ratios (the first speed through the fifth speed). Furthermore, by the gear ratio control section 55, the gear ratio of the transmission 20 can be changed to a gear ratio which is further closer to the current gear ratio of the transmission 20 by two stages or more, more than the gear ratio that is the closest to the current gear ratio of the transmission 20 existing in the LOW range that is lower than the current gear ratio of the transmission 20 within the predetermined multiple gear ratios (the first speed through the fifth speed).

Alternatively, the rider can set shift down amounts. For example, if the rider desires to make a relatively quick drive, the rider can select a mode having a large shift down amount. If the rider desires to make a relatively slow drive, the rider can select a mode having a small shift down amount. Furthermore, multiple mode temporarily changing switches 43 can be provided. For example, a mode temporarily changing switch 43 whose shift down amount is relatively small and another mode temporarily changing switch 43 whose shift down amount is relatively large can be provided.

In this embodiment, the example in which the motor 22 controlled in the manner of PWM is used as an actuator for changing the gear ratio of the transmission 20 will be described. In the present invention, however, types of the actuator changing the gear ratio of the transmission 20 are not limited. For example, the actuator changing the gear ratio of the transmission 20 can be an electric motor controlled in a manner of PAM (pulse amplitude modulation). Also, the actuator changing the gear ratio of the transmission 20 can be a stepper motor. Also, the actuator changing the gear ratio of the transmission 20 can be a hydraulic actuator or the like.

In the above embodiment, the example in which both of the automatic MT mode and the manual MT mode are selectable is described. However, for example, a setting in which either one of the automatic MT mode and the manual mode is selectable is applicable. Also, another setting in which both of the automatic MT mode and the manual MT mode are not selectable is applicable. That is, a construction in which only the AT mode and the MT shift down mode are selectable without having the mode selecting switch 44 is applicable. Furthermore, a setting in which gear change modes other than the AT mode, the automatic MT mode, the manual MT mode and the MT shift down mode are selectable is applicable.

In the above embodiment, the example in which the mode changes to the manual MT mode in the MT shift down mode is described. However, the mode can change to the automatic MT mode in the MT shift down mode. That is, a setting is applicable in which the gear ratio of the transmission 20 is automatically changed, after the mode changes to the MT shift down mode, in accordance with the running states of the motorcycle 1 without the rider's operation of the operation switch.

In the above embodiment, the example in which the gear change mode changes in turn whenever the single mode selecting switch 44 is operated is described. Alternatively, for example, a mode selecting switch for selecting the AT mode, another mode selecting switch for selecting the automatic MT mode and a further mode selecting switch for selecting the manual MT mode can be separately provided.

### Embodiment 2

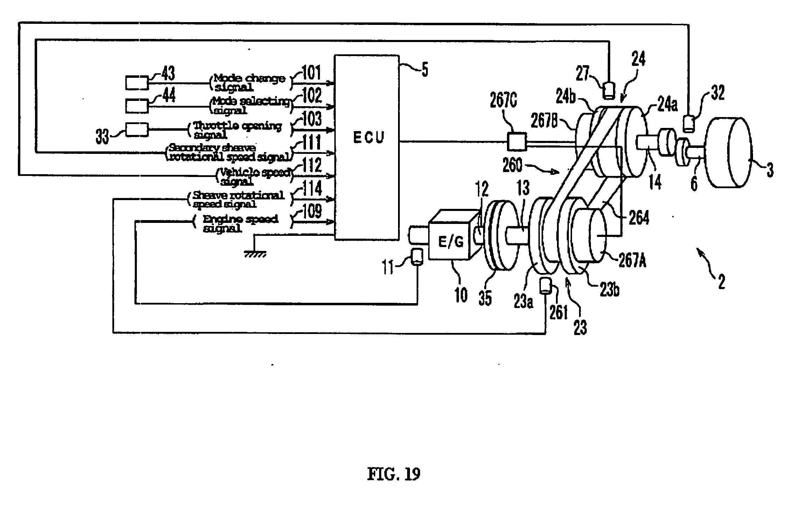

Instead of the transmission 20 of the first embodiment, for example, as shown in FIG. 19, the transmission 260 having a metal V belt may be used. In FIG. 19, the members or sections that perform the same operation as in the transmission of the embodiment described in FIG. 4 are indicated by the same reference numerals. However, in FIG. 19, the internal constitution of the ECU 5 is same as the first embodiment, and is therefore not shown in the drawings.

In this embodiment, transmission 260 is applied with several modifications in addition to the V belt 264 made of metal as shown in FIG. 19 (occasionally referred as "metal belt" hereafter).

The metal belt CVT 260 includes a clutch 35, a primary rotation sensor 261, a hydraulic cylinder 267A, 267B, and a hydraulic control valve 267C.

The clutch 35 is provided between the output shaft 12 of the engine 10 and the input shaft 13 of the metal belt CVT 260. The clutch 35 engages or disengages the power transmission between the output shaft 12 of the engine 10 and the input shaft 13 of the metal belt CVT 260. The clutch 35 of the embodiment is an electronically controlled multiplate clutch. Therefore, the engagement or disengagement of the clutch 35 is electronically controlled automatically. The driving force of the engine 10 is transmitted to the primary sheave 23 through the clutch 35 when the clutch 35 is engaged. The driving force transmitted to the primary sheave 23 is transmitted to the secondary sheave 24 through the belt 264.

The primary rotational speed sensor 261 detects the rotational speed of the primary sheave 23. The primary rotational speed sensor 261 outputs the detected rotational speed of the primary sheave 23 to the ECU 5 as a sheave rotational speed signal 114.

The primary sheave 23 and the secondary sheave 24 have a movable sheave half 23a and 24a, and fixed sheave half 23b, 24b respectively. The movable sheave half 23b is constituted so as to in the axial direction of the input shaft 13 of the metal belt 260. The movable sheave half 24b is constituted so allowed moving in the axial direction of the output shaft 14 of the metal belt CVT 260.

The primary rotation sensor 261 detects the rotational speed of the primary sheave 23. In this embodiment, the ECU 5 calculates the gear ratio of the metal belt CVT 260 from the ratio between the rotational speed of the primary sheave 23 detected by the primary rotation sensor 261 and the vehicle speed of the straddle type vehicle detected by the vehicle speed sensor 32. Specifically, the gear ratio of the metal belt CVT 260 is calculated at the ECU 5 by the ratio of the sheave rotational speed signal 114 to the vehicle speed signal 112. However, the gear ratio of the metal belt CVT 260 may be calculated from the ratio between the rotational speed of the primary sheave 23 detected by the primary rotational sensor 261 and the rotational speed of the secondary sheave 24 detected by the secondary sheave rotational speed sensor 27. That is, the gear ratio of the metal belt CVT 260 may be calculated at the ECU 5 from the ratio of the sheave rotational speed signal 114 to the secondary sheave rotational speed signal 111.

The hydraulic cylinder 267A controls the groove width of the primary sheave 23. In this embodiment, the hydraulic cylinder 267A controls the groove width of the primary sheave 23, by applying a pressure to the movable sheave half 23b constituting the primary sheave 23. The hydraulic cylinder 267B controls the groove width of the secondary sheave 24. In this embodiment, the hydraulic cylinder 267B controls the groove width of the secondary sheave 24, by applying a pressure to the movable sheave half 24b constituting the secondary sheave 24. The hydraulic control valve 267C is a valve that controls the hydraulic pressures applied to the hydraulic cylinders 267A, 267B. The hydraulic control valve 267C controls the hydraulic pressures so that when the hydraulic pressure of one of the hydraulic cylinders 267A and 267B is set higher, and the hydraulic pressure of the other of the hydraulic cylinders 267B and 267A is set lower respectively. The hydraulic control valve 267C is controlled by the ECU 5.

As for the metal belt CVT 260, the gear ratio of the metal belt CVT 260 is changed by control of the hydraulic control valve 267C at the ECU 5. The control of the ECU 5 is performed in the same way as in the first embodiment. As for the metal belt CVT 260 according to this embodiment, the ECU 5 may set the rotational speed of the primary sheave 23 instead of the engine speed as a control target value.

The term "driving source" refers to a device that generates power. The "driving source" may be, for example, an internal combustion engine, an electric motor or the like.

The term "electronically controlled transmission" means transmission in general whose gear ratio is changed by using electric power. The "electronically controlled transmission" includes a transmission whose gear ratio is changed by an electric motor and a transmission whose gear ratio is changed by an electronically controlled hydraulic actuator. That is, insofar as it is electronically controlled, types of the actuator for changing the gear ratio are not specifically limited.

The "push type switch" includes, for example, a lever type push type switch and a button type switch.

The "motorcycle" includes not only a motorcycle in a narrow sense but also, for example, a scooter and a so-called moped.

The present invention is useful for vehicles having the ECVT.

### Description of Reference Numerals

1: motorcycle
2: power unit
3: rear wheel (drive wheel)
4: handle
4a: left grip section
4b: right grip section
4c: brake lever
5 ECU (control section)
10: engine (drive source)
11: engine speed sensor
20: transmission
21: gear change mechanism
22: electric motor
32: vehicle speed sensor
33: throttle opening sensor
40: switch box
41: shift up switch
42: shift down switch
43: mode temporarily changing switch
44: mode selecting switch
50: CPU
51: MT mode temporarily selecting section
52: gear change mode selecting section
53: release signal outputting section
54: AT mode returning section
55: gear ratio control section
56: driving circuit
57: memory
60: left hand
60a: thumb
101: mode change signal
102: mode selection signal
103: throttle opening signal
104: brake signal
105: shift up signal
106: shift down signal
107: release signal
109: engine speed signal
110: sheave position detection signal
112: vehicle speed signal
113: throttle control signal
114: sheave rotational speed signal
260: metal belt CVT
261: primary rotation sensor
267c: hydraulic control valve

## Claims

1. A control system (5) adapted for use with an electronically controlled continuously variable transmission (20) located between a driving source (10) and a driving wheel (3) of a vehicle (1), said control system (5) comprising:
a gear ratio control section (55) for controlling a gear ratio of the transmission (20);
a gear change mode selecting section (52) for selecting one of a plurality of gear change modes, including an automatic transmission (AT) mode in which the gear ratio control section (55) changes the gear ratio of the transmission (20) continuously and a manual transmission (MT) mode in which the gear ratio control section (55) changes the gear ratio of the transmission (20) among a plurality of predetermined gear ratios;
a mode temporarily changing switch (43) for outputting a mode change signal;
an MT mode temporarily selecting section (51) for:
temporarily making the gear change mode selecting section (52) select the MT mode temporarily when the mode change signal is inputted in the AT mode selected by the gear change mode selecting section (52); and
making the gear ratio control section (55) change a gear ratio of the transmission (20) to one of the plurality of the predetermined gear ratios which is lower than a current gear ratio;
a release signal outputting section (53) for outputting a release signal when at least one of a predetermined vehicle operation is made and a predetermined condition is satisfied in connection with the vehicle (1); and
an AT mode returning section (54) for returning the gear change mode selected by the gear change mode selecting section (52) to the AT mode when the release signal is outputted after the MT mode is temporarily selected by the MT mode temporarily selecting section (51).

2. The control system (5) according to claim 1, wherein the MT mode includes:
an automatic MT mode in which the gear ratio control section (55) automatically changes a gear ratio of the transmission (20) among the plurality of predetermined gear ratios in accordance with a driving state of the vehicle (1); and
a manual MT mode in which the gear ratio control section (55) changes a gear ratio of the transmission (20) among the plurality of predetermined gear ratios in accordance with an operation of a rider of the vehicle.

3. The control system (5) according to claim 1 or 2, further comprising:
a throttle opening sensor (33) for detecting a throttle opening;
a rotational speed sensor (11) for detecting a rotational speed of the driving source (10) of an associated vehicle (1), and
a vehicle speed sensor (32) for detecting a vehicle speed of the associated vehicle (1),
wherein the release signal outputting section (53) outputs the release signal if at least one item among a throttle opening of the vehicle (1), a rotational speed of the driving source (10), and a vehicle speed of the vehicle (1) satisfies the predetermined condition.

4. The control system (5) according to claim 1, 2 or 3, wherein the release signal outputting section (53) outputs a release signal when a predetermined period elapses after the MT mode is temporarily selected by the MT mode temporarily selecting section (51).

5. The control system (5) according to any preceding claim, wherein, the release signal outputting section (53) outputs the release signal when a brake of an associated vehicle (1) is operated.

6. The control system (5) according to any preceding claim, further comprising:
a shift up switch (41) for shifting up the transmission when the gear change mode selecting section (52) selects the MT mode,
and the release signal outputting section (53) outputs the release signal when the shift up switch (41) is operated during a period in which the MT mode is temporarily selected by the MT mode temporarily selecting section (51).

7. The control system (5) according to any preceding claim, wherein the release signal outputting section (53) outputs the release signal when the mode change signal is outputted after the MT mode is temporarily selected by the MT mode temporarily selecting section (51).

8. The control system (5) according to any preceding claim, further comprising a shift down switch (42) for outputting a shift down signal.

9. The control system (5) according to any preceding claim, wherein the gear ratio control section (55) changes the gear ratio of the transmission (20) to one of the plurality of predetermined gear ratios which is lower than the current gear ratio, when the mode change signal is outputted during a period in which the MT mode is temporarily selected by the MT mode temporarily selecting section (51).

10. The control system (5) according to any preceding claim, wherein the mode temporarily changing switch (43) comprises a push type switch which outputs the mode change signal when the switch is activated.

11. The control system (5) according to any one of claims 8 to 10, wherein the shift down switch (42) is adapted to shift down the transmission (20) when the gear change mode selecting section (52) selects the MT mode, and the shift down switch (42) and the mode temporarily changing switch (43) are comprised in a single switch.

12. The control system (5) according to any preceding claim, further comprising a mode selecting switch (44) for outputting a mode selecting signal, whereby the gear change mode selecting section (52) selects one of the plurality of gear change modes.

13. A transmission (20) comprising:
a continuously variable electronically controlled gear change mechanism (21) adapted to be disposed between a driving source (10) and a driving wheel (3) of a vehicle (1);
a control system (5) for controlling the gear change mechanism (21), wherein the control system (5) comprises:
a gear ratio control section (55) for controlling the gear ratio of the gear change mechanism (21);
a gear change mode selecting section (52) for selecting one of a plurality of gear change modes, including an automatic transmission (AT) mode in which the gear ratio control section (55) changes the gear ratio of the gear change mechanism (21) continuously and a manual transmission (MT) mode in which the gear ratio control section (55) changes the gear ratio of the gear change mechanism (21) among a plurality of predetermined gear ratios;
a mode temporarily changing switch (43) for outputting a mode change signal;
an MT mode temporarily selecting section (51) for:
temporarily making the gear change mode selecting section (52) select the MT mode temporarily when the mode change signal is inputted in the AT mode selected by the gear change mode selecting section (52); and
making the gear ratio control section (55) change a gear ratio of the gear change mechanism (21) to one of the plurality of predetermined gear ratios which is lower than a current gear change ratio;
a release signal outputting section (53) for outputting a release signal when at least one of a predetermined vehicle operation is made and a predetermined condition is satisfied in connection with the vehicle (1); and
an AT mode returning section (54) for returning the gear change mode selected by the gear change mode selecting section (52) to the AT mode when the release signal is outputted after the MT mode is temporarily selected by the MT mode temporarily selecting section (51).

14. A vehicle (1) comprising:
a driving source (10);
a driving wheel (3) driven by the driving source (10) ;
a transmission (20) located between the driving source (10) and the driving wheel (3) and including a continuously variable electrically controlled gear change mechanism (21);
a control system (5) for controlling the gear change mechanism (21), wherein the control system comprises:
a gear ratio control section (55) for controlling the gear ratio of the gear change mechanism (21);
a gear change mode selecting section (52) for selecting one of a plurality gear change modes, including an automatic transmission (AT) mode in which the gear ratio control section (55) changes the gear ratio of the gear change mechanism (21) continuously and a manual transmission (MT) mode in which the gear ratio control section (55) changes the gear ratio of the gear change mechanism (21) among a plurality of predetermined gear ratios;
a mode temporarily changing switch (43) for outputting a mode change signal;
an MT mode temporarily selecting section (51) for:
temporarily making the gear change mode selecting section (52) select the MT mode temporarily when the mode change signal is inputted in the AT mode selected by the gear change mode selecting section (52); and
making the gear ratio control section (55) change a gear ratio of the gear change mechanism (21) to one of the plurality of predetermined gear ratios which is lower than the current gear ratio; and
a release signal outputting section (53) for outputting a release signal when at least one of a predetermined vehicle operation is made and when a predetermined condition is satisfied in connection with the vehicle (1); and
an AT mode returning section (54) for returning the gear change mode selected by the gear change mode selecting section (52) to the AT mode when the release signal is outputted after the MT mode is temporarily selected by the MT mode temporarily selecting section (51).

15. The vehicle (1) according to Claim 14, wherein the mode temporarily changing switch (43) is located where a rider can operate the switch by their thumb (60a).

16. The vehicle (1) according to Claim 14 or 15, further comprising handlebars (4) including a right grip (4b) and a left grip (4a) for a rider to hold, wherein the mode temporarily changing switch (43) is located on a right side of the left grip (4a).

## Patentansprüche

1. Steuerungssystem (5), das zur Verwendung mit einem elektronisch gesteuerten stufenlosen Getriebe (20) geeignet ist, das zwischen einer Antriebsquelle (10) und einem Antriebsrad (3) eines Fahrzeugs (1) angeordnet ist, wobei das Steuerungssystem (5) umfasst:
einen Übersetzungsverhältnissteuerungsabschnitt (55) zum Steuern eines Übersetzungsverhältnisses des Getriebes (20);
einen Gangwechselmoduswählabschnitt (52) zum Wählen eines aus einer Vielzahl von Gangwechselmodi, einschließlich eines Automatikgetriebe-(AT-)Modus, in dem der Übersetzungsverhältnissteuerungsabschnitt (55) das Übersetzungsverhältnis des Getriebes (20) kontinuierlich ändert, und eines Schaltgetriebe-(MT-)Modus, in dem der Übersetzungsverhältnissteuerungsabschnitt (55) das Übersetzungsverhältnis des Getriebes (20) zwischen einer Vielzahl von vorbestimmten Übersetzungsverhältnissen ändert,
einen Modustemporärwechselschalter (43) zum Ausgeben eines Moduswechselsignals;
einen MT-Modustemporärwählabschnitt (51) zum:
temporären Bewirken, dass der Gangwechselmoduswählabschnitt (52) den MT-Modus temporär wählt, wenn das Moduswechselsignal in dem durch den Gangwechselmoduswählabschnitt (52) gewählten AT-Modus eingegeben wird; und
Bewirken, dass der Übersetzungsverhältnissteuerungsabschnitt (55) ein Übersetzungsverhältnis des Getriebes (20) in eines aus der Vielzahl der vorbestimmten Übersetzungsverhältnisse umschaltet, das niedriger ist als ein aktuelles Übersetzungsverhältnis;
einen Freigabesignalausgabeabschnitt (53) zum Ausgeben eines Freigabesignals, wenn mindestens eines gilt, nämlich dass eine vorbestimmte Fahrzeugbedienung erfolgt ist und/oder eine vorbestimmte Bedingung im Zusammenhang mit dem Fahrzeug (1) erfüllt ist; und
einen AT-Modusrückstellabschnitt (54) zum Zurückstellen des durch den Gangwechselmoduswählabschnitt (52) gewählten Gangwechselmodus in den AT-Modus, wenn das Freigabesignal ausgegeben ist, nachdem der MT-Modus durch den MT-Modustemporärwählabschnitt (51) gewählt worden ist.

2. Steuerungssystem (5) nach Anspruch 1, wobei der MT-Modus umfasst:
einen automatischen MT-Modus, in dem der Übersetzungsverhältnissteuerungsabschnitt (55) ein Übersetzungsverhältnis des Getriebes (20) unter der Vielzahl von vorbestimmten Übersetzungsverhältnissen entsprechend einem Antriebszustand des Fahrzeugs (1) automatisch ändert; und
einen manuellen MT-Modus, in dem der Übersetzungsverhältnissteuerungsabschnitt (55) ein Übersetzungsverhältnis des Getriebes (20) unter der Vielzahl von vorbestimmten Übersetzungsverhältnissen entsprechend einer Betätigung durch den Führer des Fahrzeugs ändert.

3. Steuerungssystem (5) nach Anspruch 1 oder 2, ferner umfassend:
einen Drosselklappenöffnungssensor (33) zum Ermitteln einer Drosselklappenöffnung;
einen Drehzahlsensor (11) zum Ermitteln einer Drehzahl der Antriebsquelle (10) eines zugeordneten Fahrzeugs (1); und
einen Fahrzeuggeschwindigkeitssensor (32) zum Ermitteln einer Fahrzeuggeschwindigkeit des zugeordneten Fahrzeugs (1),
wobei der Freigabesignalausgabeabschnitt (53) das Freigabesignal ausgibt, wenn das Freigabesignal mindestens eines von Folgendem, nämlich eine Drosselöffnung des Fahrzeugs (1), eine Drehzahl der Antriebsquelle (10) und/oder eine Fahrzeuggeschwindigkeit des Fahrzeugs (1) die vorbestimmte Bedingung erfüllt.

4. Steuerungssystem (5) nach Anspruch 1, 2 oder 3, wobei der Freigabesignalausgabeabschnitt (53) ein Freigabesignal ausgibt, wenn eine vorbestimmte Zeitdauer vergangen ist, nachdem der MT-Modus durch den MT-Modustemporärwählabschnitt (51) temporär gewählt worden ist.

5. Steuerungssystem (5) nach einem der vorhergehenden Ansprüche, wobei der Freigabesignalausgabeabschnitt (53) das Freigabesignal ausgibt, wenn eine Bremse eines zugeordneten Fahrzeugs (1) betätigt wird.

6. Steuerungssystem (5) nach einem der vorhergehenden Ansprüche, ferner umfassend:
einen Hochschalt-Schalter (41) zum Hochschalten des Getriebes, wenn der Gangwechselmoduswählabschnitt (52) den MT-Modus wählt
und der Freigabesignalausgabeabschnitt (53) das Freigabesignal ausgibt, wenn der Hochschalt-Schalter (41) während einer Zeitdauer betätigt wird, in der der MT-Modus durch den MT-Modustemporärwählabschnitt (51) temporär gewählt ist.

7. Steuerungssystem (5) nach einem der vorhergehenden Ansprüche, wobei der Freigabesignalausgabeabschnitt (53) das Freigabesignal ausgibt, wenn das Moduswechselsignal ausgegeben wird, nachdem der MT-Modus durch den MT-Modustemporärwählabschnitt (51) temporär gewählt worden ist.

8. Steuerungssystem (5) nach einem der vorhergehenden Ansprüche, ferner umfassend: einen Herunterschalt-Schalter (42) zum Ausgeben eines Herunterschalt-Signals.

9. Steuerungssystem (5) nach einem der vorhergehenden Ansprüche, wobei der Übersetzungsverhältnissteuerungsabschnitt (55) das Übersetzungsverhältnis des Getriebes (20) in eines aus der Vielzahl der vorbestimmten Übersetzungsverhältnissen umschaltet, das niedriger ist als ein aktuelles Übersetzungsverhältnis, wenn das Moduswechselsignal während einer Zeitdauer ausgegeben wird, in der der MT-Modus durch den MT-Modustemporärwählabschnitt (51) temporär gewählt ist.

10. Steuerungssystem (5) nach einem der vorhergehenden Ansprüche, wobei der Modustemporärwechselschalter (43) einen Drucktastenschalter umfasst, der das Moduswechselsignal ausgibt, wenn der Schalter aktiviert wird.

11. Steuerungssystem (5) nach einem der Ansprüche 8 bis 10, wobei der Herunterschalt-Schalter (42) geeignet ist, das Getriebe (20) herunterzuschalten, wenn der Gangwechselmoduswählabschnitt (52) den MT-Modus wählt, und der Herunterschalt-Schalter (42) und der Modustemporärwechselschalter (43) einen einzigen Schalter bilden.

12. Steuerungssystem (5) nach einem der vorhergehenden Ansprüche, ferner umfassend einen Moduswählschalter (44) zum Ausgeben eines Moduswählsignals, wodurch der Gangwechselmoduswählabschnitt (52) einen aus der Vielzahl von Gangwechselmodi wählt.

13. Getriebe (20), umfassend:
einen elektronisch gesteuerten stufenlosen Gangwechselmechanismus (21), der geeignet ist, zwischen einer Antriebsquelle (10) und einem Antriebsrad (3) eines Fahrzeugs (1) angeordnet zu werden,
ein Steuerungssystem (5) zum Steuern des Gangwechselmechanismus (21), wobei das Steuerungssystem (5) umfasst:
einen Übersetzungsverhältnissteuerungsabschnitt (55) zum Steuern des Übersetzungsverhältnisses des Gangwechselmechanismus (21);
einen Gangwechselmoduswählabschnitt (52) zum Wählen eines aus einer Vielzahl von Gangwechselmodi, einschließlich eines Automatikgetriebe-(AT-)Modus, in dem der Übersetzungsverhältnissteuerungsabschnitt (55) das Übersetzungsverhältnis des Gangwechselmechanismus (21) kontinuierlich ändert, und eines Schaltgetriebe-(MT-)Modus, in dem der Übersetzungsverhältnissteuerungsabschnitt (55) das Übersetzungsverhältnis des Gangwechselmechanismus (21) unter einer Vielzahl von vorbestimmten Übersetzungsverhältnissen ändert;
einen Modustemporärwechselschalter (43) zum Ausgeben eines Moduswechselsignals;
einen MT-Modustemporärwählabschnitt (51) zum:
temporären Bewirken, dass der Gangwechselmoduswählabschnitt (52) den MT-Modus temporär wählt, wenn das Moduswechselsignal in dem durch den Gangwechselmoduswählabschnitt (52) gewählten AT-Modus eingegeben wird; und
Bewirken, dass der Übersetzungsverhältnissteuerungsabschnitt (55) ein Übersetzungsverhältnis des Gangwechselmechanismus (21) in eines aus der Vielzahl von vorbestimmten Übersetzungsverhältnissen umschaltet, das niedriger ist als ein aktuelles Übersetzungsverhältnis;
einen Freigabesignalausgabeabschnitt (53) zum Ausgeben eines Freigabesignals, wenn mindestens eines gilt, nämlich dass eine vorbestimmte Fahrzeugbedienung erfolgt ist und/oder eine vorbestimmte Bedingung im Zusammenhang mit dem Fahrzeug (1) erfüllt ist; und
einen AT-Modusrückstellabschnitt (54) zum Zurückstellen des durch den Gangwechselmoduswählabschnitt (52) gewählten Gangwechselmodus in den AT-Modus, wenn das Freigabesignal ausgegeben ist, nachdem der MT-Modus durch den MT-Modustemporärwählabschnitt (51) gewählt worden ist.

14. Fahrzeug (1), umfassend:
eine Antriebsquelle (10);
ein Antriebsrad (3), das durch die Antriebsquelle (10) angetrieben wird;
ein Getriebe (20), das zwischen einer Antriebsquelle (10) und einem Antriebsrad (3) angeordnet ist und einen elektrisch gesteuerten stufenlosen Gangwechselmechanismus (21) aufweist;
ein Steuerungssystem (5) zum Steuern der Gangwechselmechanismus (21), wobei das Steuerungssystem umfasst:
einen Übersetzungsverhältnissteuerungsabschnitt (55) zum Steuern des Übersetzungsverhältnisses des Gangwechselmechanismus (21);
einen Gangwechselmoduswählabschnitt (52) zum Wählen eines aus einer Vielzahl von Gangwechselmodi, einschließlich eines Automatikgetriebe-(AT-)Modus, in dem der Übersetzungsverhältnissteuerungsabschnitt (55) das Übersetzungsverhältnis des Gangwechselmechanismus (21) kontinuierlich ändert, und eines Schaltgetriebe-(MT-)Modus, in dem der Übersetzungsverhältnissteuerungsabschnitt (55) das Übersetzungsverhältnis des Gangwechselmechanismus (21) unter einer Vielzahl von vorbestimmten Übersetzungsverhältnissen ändert;
einen Modustemporärwechselschalter (43) zum Ausgeben eines Moduswechselsignals;
einen MT-Modustemporärwählabschnitt (51) zum:
temporären Bewirken, dass der Gangwechselmoduswählabschnitt (52) den MT-Modus temporär wählt, wenn das Moduswechselsignal in dem durch den Gangwechselmoduswählabschnitt (52) gewählten AT-Modus eingegeben ist; und
Bewirken, dass der Übersetzungsverhältnissteuerungsabschnitt (55) ein Übersetzungsverhältnis des Gangwechselmechanismus (21) in eines aus der Vielzahl von vorbestimmten Übersetzungsverhältnissen umschaltet, das niedriger ist als ein aktuelles Übersetzungsverhältnis; und
einen Freigabesignalausgabeabschnitt (53) zum Ausgeben eines Freigabesignals, wenn mindestens eines gilt, nämlich dass eine vorbestimmte Fahrzeugbedienung erfolgt ist und/oder eine vorbestimmte Bedingung im Zusammenhang mit dem Fahrzeug (1) erfüllt ist; und
einen AT-Modusrückstellabschnitt (54) zum Zurückstellen des durch den Gangwechselmoduswählabschnitt (52) gewählten Gangwechselmodus in den AT-Modus, wenn das Freigabesignal ausgegeben ist, nachdem der MT-Modus durch den MT-Modustemporärwählabschnitt (51) gewählt worden ist.

15. Fahrzeug (1) nach Anspruch 14, wobei der Modustemporärwechselschalter (43) dort angeordnet ist, wo ein Fahrzeugführer den Schalter mit seinem Daumen (60a) betätigen kann.

16. Fahrzeug (1) nach Anspruch 14 oder 15, ferner umfassend einen Lenker (4) mit einem rechten Griff (4b) und einem linken Griff (4a), die ein Fahrzeugführer halten kann, wobei der Modustemporärwechselschalter (43) an einer rechten Seite des linken Griffes (4a) angeordnet ist.

## Revendications

1. Système de commande (5) conçu pour une utilisation avec une transmission à variation continue commandée électroniquement (20) située entre une source d'entraînement (10) et une roue motrice (3) d'un véhicule (1), ledit système de commande (5) comprenant :
une section de commande de rapport de transmission (55) pour commander un rapport de transmission de la transmission (20) ;
une section de sélection de mode de changement de rapport (52) pour sélectionner l'un d'une pluralité de modes de changement de rapport, comprenant un mode de transmission automatique (AT) dans lequel la section de commande de rapport de transmission (55) change le rapport de transmission de la transmission (20) continûment et un mode de transmission manuelle (MT) dans lequel la section de commande de rapport de transmission (55) change le rapport de transmission de la transmission (20) entre une pluralité de rapports de transmission prédéterminés ;
un commutateur de changement temporaire de mode (43) pour délivrer un signal de changement de mode ;
une section de sélection temporaire de mode MT (51) pour :
amener temporairement la section de sélection de mode de changement de rapport (52) à sélectionner le mode MT temporairement lorsque le signal de changement de mode est passé dans le mode AT sélectionné par la section de sélection de mode de changement de rapport (52) ; et
amener la section de commande de rapport de transmission (55) à changer le rapport de transmission de la transmission (20) en l'un de la pluralité des rapports de transmission prédéterminés qui est inférieur à un rapport de transmission actuel ;
une section de sortie de signal de libération (53) pour délivrer un signal de libération lorsqu'au moins une opération de véhicule prédéterminée est effectuée et lorsqu'une condition prédéterminée est satisfaite en relation avec le véhicule (1) ; et
une section de retour au mode AT (54) pour ramener le mode de changement de rapport sélectionné par la section de sélection de mode de changement de rapport (52) au mode AT lorsque le signal de libération est délivré après que le mode MT a été temporairement sélectionné par la section de sélection temporaire de mode MT (51).

2. Système de commande (5) selon la revendication 1, dans lequel le mode MT comprend :
un mode MT automatique dans lequel la section de commande de rapport de transmission (55) change automatiquement un rapport de transmission de la transmission (20) entre la pluralité de rapports de transmission prédéterminés conformément à un état de conduite du véhicule (1) ; et
un mode MT manuel dans lequel la section de commande de rapport de transmission (55) change un rapport de transmission de la transmission (20) entre la pluralité de rapports de transmission prédéterminés conformément à une opération d'un conducteur du véhicule.

3. Système de commande (5) selon la revendication 1 ou 2, comprenant en outre :
un capteur d'ouverture de papillon (33) pour détecter une ouverture de papillon ;
un capteur de vitesse de rotation (11) pour détecter une vitesse de rotation de la source d'entraînement (10) d'un véhicule (1) associé, et
un capteur de vitesse de véhicule (32) pour détecter une vitesse de véhicule du véhicule (1) associé,
dans lequel la section de sortie de signal de libération (53) délivre le signal de libération si au moins un élément parmi une ouverture de papillon du véhicule (1), une vitesse de rotation de la source d'entraînement (10) et une vitesse de véhicule du véhicule (1) satisfait à la condition prédéterminée.

4. Système de commande (5) selon la revendication 1, 2 ou 3, dans lequel la section de sortie de signal de libération (53) délivre un signal de libération lorsqu'une période prédéterminée s'est écoulée après que le mode MT a été temporairement sélectionné par la section de sélection temporaire de mode MT (51).

5. Système de commande (5) selon l'une quelconque des revendications précédentes, dans lequel la section de sortie de signal de libération (53) délivre le signal de libération lorsqu'un frein d'un véhicule (1) associé est actionné.

6. Système de commande (5) selon l'une quelconque des revendications précédentes, comprenant en outre :
un commutateur de passage au rapport supérieur (41) pour faire passer la transmission au rapport supérieur lorsque la section de sélection de mode de changement de rapport (52) sélectionne le mode MT,
et la section de sortie de signal de libération (53) délivre le signal de libération lorsque le commutateur de passage au rapport supérieur (41) est actionné pendant une période pendant laquelle le mode MT est temporairement sélectionné par la section de sélection temporaire de mode MT (51).

7. Système de commande (5) selon l'une quelconque des revendications précédentes, dans lequel la section de sortie de signal de libération (53) délivre le signal de libération lorsque le signal de changement de mode est délivré après que le mode MT a été temporairement sélectionné par la section de sélection temporaire de mode MT (51).

8. Système de commande (5) selon l'une quelconque des revendications précédentes, comprenant en outre un commutateur de rétrogradation (42) pour délivrer un signal de rétro gradation.

9. Système de commande (5) selon l'une quelconque des revendications précédentes, dans lequel la section de commande de rapport de transmission (55) change le rapport de transmission de la transmission (20) en l'un de la pluralité de rapports de transmission prédéterminés qui est inférieur au rapport de transmission actuel, lorsque le signal de changement de mode est délivré pendant une période pendant laquelle le mode MT est temporairement sélectionné par la section de sélection temporaire de mode MT (51).

10. Système de commande (5) selon l'une quelconque des revendications précédentes, dans lequel le commutateur de changement temporaire de mode (43) comprend un commutateur de type poussoir qui délivre le signal de changement de mode lorsque le commutateur est activé.

11. Système de commande (5) selon l'une quelconque des revendications 8 à 10, dans lequel le commutateur de rétrogradation (42) est conçu pour rétrograder la transmission (20) lorsque la section de sélection de mode de changement de rapport (52) sélectionne le mode MT, et le commutateur de rétrogradation (42) et le commutateur de changement temporaire de mode (43) sont compris dans un commutateur unique.

12. Système de commande (5) selon l'une quelconque des revendications précédentes, comprenant en outre un commutateur de sélection de mode (44) pour délivrer un signal de sélection de mode, par lequel la section de sélection de mode de changement de rapport (52) sélectionne l'un de la pluralité de modes de changement de rapport.

13. Transmission (20) comprenant :
un mécanisme de changement de rapport commandé électroniquement à variation continue (21) conçu pour être disposé entre une source d'entraînement (10) et une roue motrice (3) d'un véhicule (1) ;
un système de commande (5) pour commander le mécanisme de changement de rapport (21), dans lequel le système de commande (5) comprend :
une section de commande de rapport de transmission (55) pour commander le rapport de transmission du mécanisme de changement de rapport (21) ;
une section de sélection de mode de changement de rapport (52) pour sélectionner l'un d'une pluralité de modes de changement de rapport, comprenant un mode de transmission automatique (AT) dans lequel la section de commande de rapport de transmission (55) change le rapport de transmission du mécanisme de changement de rapport (21) continûment et un mode de transmission manuelle (MT) dans lequel la section de commande de rapport de transmission (55) change le rapport de transmission du mécanisme de changement de rapport (21) entre une pluralité de rapports de transmission prédéterminés ;
un commutateur de changement temporaire de mode (43) pour délivrer un signal de changement de mode ;
une section de sélection temporaire de mode MT (51) pour :
amener temporairement la section de sélection de mode de changement de rapport (52) à sélectionner le mode MT temporairement lorsque le signal de changement de mode est passé dans le mode AT sélectionné par la section de sélection de mode de changement de rapport (52) ; et
amener la section de commande de rapport de transmission (55) à changer un rapport de transmission du mécanisme de changement de rapport (21) en l'un de la pluralité de rapports de transmission prédéterminés qui est inférieur à un rapport de transmission actuel ;
une section de sortie de signal de libération (53) pour délivrer un signal de libération lorsqu'au moins une opération de véhicule prédéterminée est effectuée et lorsqu'une condition prédéterminée est satisfaite en relation avec le véhicule (1) ; et
une section de retour au mode AT (54) pour ramener le mode de changement de rapport sélectionné par la section de sélection de mode de changement de rapport (52) dans le mode AT lorsque le signal de libération est délivré après que le mode MT a été temporairement sélectionné par la section de sélection temporaire de mode MT (51).

14. Véhicule (1) comprenant :
une source d'entraînement (10) ;
une roue motrice (3) entraînée par la source d'entraînement (10) ;
une transmission (20) située entre la source d'entraînement (10) et la roue motrice (3) et comprenant un mécanisme de changement de rapport commandé électriquement à variation continue (21) ;
un système de commande (5) pour commander le mécanisme de changement de rapport (21), dans lequel le système de commande comprend :
une section de commande de rapport de transmission (55) pour commander le rapport de transmission du mécanisme de changement de rapport (21) ;
une section de sélection de mode de changement de rapport (52) pour sélectionner l'un d'une pluralité de modes de changement de rapport, comprenant un mode de transmission automatique (AT) dans lequel la section de commande de rapport de transmission (55) change le rapport de transmission du mécanisme de changement de rapport (21) continûment et un mode de transmission manuelle (MT) dans lequel la section de commande de rapport de transmission (55) change le rapport de transmission du mécanisme de changement de rapport (21) entre une pluralité de rapports de transmission prédéterminés ;
un commutateur de changement temporaire de mode (43) pour délivrer un signal de changement de mode ;
une section de sélection temporaire de mode MT (51) pour :
amener temporairement la section de sélection de mode de changement de rapport (52) à sélectionner le mode MT temporairement lorsque le signal de changement de mode est passé dans le mode AT sélectionné par la section de sélection de mode de changement de rapport (52) ; et
amener la section de commande de rapport de transmission (55) à changer un rapport de transmission du mécanisme de changement de rapport (21) en l'un de la pluralité de rapports de transmission prédéterminés qui est inférieur au rapport de transmission actuel ; et
une section de sortie de signal de libération (53) pour délivrer un signal de libération lorsqu'au moins une opération de véhicule prédéterminée est effectuée et lorsqu'une condition prédéterminée est satisfaite en relation avec le véhicule (1) ; et
une section de retour au mode AT (54) pour ramener le mode de changement de rapport sélectionné par la section de sélection de mode de changement de rapport (52) au mode AT lorsque le signal de libération est délivré après que le mode MT a été temporairement sélectionné par la section de sélection temporaire de mode MT (51).

15. Véhicule (1) selon la revendication 14, dans lequel le commutateur de changement temporaire de mode (43) est situé à un emplacement où un conducteur peut actionner le commutateur avec son pouce (60a).

16. Véhicule (1) selon la revendication 14 ou 15, comprenant en outre un guidon (4) comprenant une poignée droite (4b) et une poignée gauche (4a) destinées à être tenues par un conducteur, dans lequel le commutateur de changement temporaire de mode (43) est situé d'un côté droit de la poignée gauche (4a).
